# EUROPÄISCHE PATENTANMELDUNG

(11) **EP 3 228 599 A1**
(43) Veröffentlichungstag der Anmeldung: **11.10.2017**
(21) Anmeldenummer: 17163488.4
(22) Anmeldetag: 29.03.2017
(51) Int. Cl.: C02F 1/52, B01D 9/00, B01D 21/01, B01D 21/02, C02F 101/10, C02F 103/20, C02F 1/66, C02F 1/00

(54) **VORRICHTUNG UND VERFAHREN FÜR DIE EXTRAKTION VON PHOSPHOR AUS ABWASSER**

(30) Priorität: 08.04.2016 DE 102016004080
(71) Anmelder: Eliquo Stulz GmbH, 79865 Grafenhausen (DE)
(72) Erfinder: Knörle, Ulrich, 88289 Waldburg (DE)
(74) Vertreter: Plate, Jürgen

(57) **Zusammenfassung**

Eine Vorrichtung für die Extraktion von Phosphor aus Abwasser, umfasst ein Fällungsmodul und ein Rückhaltemodul, wobei das Fällungsmodul einen Kristallisationsbehälter, einen oder mehrere in einem unteren Bereich des Fällungsmoduls angeordnete Einlässe und mindestens einen in einem oberen Bereich des Fällungsmoduls angeordneten Auslass umfasst, das Rückhaltemodul einen Sedimentationsbehälter, mindestens einen in einem oberen Bereich des Rückhaltemoduls angeordneten Einlass und mindestens einen in einem unteren Bereich des Rückhaltemoduls angeordneten Auslass umfasst, mindestens ein Auslass des Fällungsmoduls mit mindestens einem Einlass des Rückhaltemoduls und mindestens ein Auslass des Rückhaltemoduls mit mindestens einem Einlass des Fällungsmoduls verbunden ist, und das Volumen VS des Sedimentationsbehälters größer/gleich dem 0,6-fachen des Volumens VK des Kristallisationsbehälters ist (VS ≥ 0,6·VK).

## Beschreibung

Die vorliegende Erfindung betrifft eine Vorrichtung für die Extraktion von Phosphor aus Abwasser, umfassend ein Fällungsmodul und ein Rückhaltemodul, wobei das Fällungsmodul einen Kristallisationsbehälter, einen oder mehrere in einem unteren Bereich des Fällungsmoduls angeordnete Einlässe und mindestens einen in einem oberen Bereich des Fällungsmoduls angeordneten Auslass umfasst, das Rückhaltemodul einen Sedimentationsbehälter, mindestens einen in einem oberen Bereich des Rückhaltemodul angeordneten Einlass und mindestens einen in einem unteren Bereich des Rückhaltemoduls angeordneten Auslass umfasst und mindestens ein Auslass des Fällungsmoduls mit mindestens einem Einlass des Rückhaltemoduls und mindestens ein Auslass des Rückhaltemoduls mit mindestens einem Einlass des Fällungsmoduls verbunden ist.

Zudem betrifft die Erfindung ein Verfahren für die Extraktion von Phosphor aus Abwasser, umfassend die Schritte Fällung von phosphorhaltigem Präzipitat in einem Kristallisationsbehälter in einer aufwärts gerichteten Abwasserströmung, Sedimentation von Präzipitat in einem Sedimentationsbehälter in einer abwärts gerichteten Abwasserströmung und Rückführung von Abwasser und Präzipitat von dem Sedimentationsbehälter in den Kristallisationsbehälter.

Die Vorrichtung und das Verfahren der vorliegenden Erfindung sind dafür geeignet, Abwasser, Rohschlamm, stabilisierten Klärschlamm, Faulschlamm und Schlammzentrat zu behandeln. Insbesondere sind die erfindungsgemäße Vorrichtung und das Verfahren vorgesehen für die Behandlung von stabilisiertem Klärschlamm und Faulschlamm mit einem hohen Trockensubstanzgehalt (hier und im Folgenden mit TS bezeichnet) von bis zu 7 %.

Phosphor gehört zu den Rohstoffen, die in einem absehbaren Zeitraum aus heutiger Sicht einer sehr starken Verknappung unterliegen. Dies hat die deutsche Bundesregierung erkannt und deshalb im Koalitionsvertrages folgendes festgeschrieben: "Der Schutz der Gewässer vor Nährstoffeinträgen sowie Schadstoffen soll verstärkt und rechtlich so gestaltet werden, dass Fehlentwicklungen korrigiert werden. Wir werden die Klärschlammausbringung zu Düngezwecken beenden und Phosphor und andere Nährstoffe zurückgewinnen." (CDU, 2013). Dass eine Phosphorrückgewinnung durchaus seine Berechtigung hat, zeigt die Tatsache, dass die geschätzten Weltvorräte im Jahr 1979 noch bei 50 Milliarden Tonnen lagen, was bei dem damaligen Verbrauch einer Verfügbarkeit von 500 Jahren entsprach. Nach Schätzungen aus dem Jahr 2012 liegt die Endlichkeit der abbauwürdigen Vorräte bei etwa 100 Jahren (Ehbrecht, Fuderer, Schönauer, & Schuhmann, 2012).

Die Rückgewinnung von Phosphor im Bereich der kommunalen und industriellen Abwasser-und Schlammbehandlung kann entweder aus der wässrigen Phase, aus dem Schlamm oder aus den Aschen nach einer Klärschlammverbrennung erfolgen. Das hier beanspruchte Verfahren sowie die beanspruchte Vorrichtung zur Durchführung des Verfahrens hat eine Rückgewinnung von Phosphor aus der wässrigen Phase und aus dem Schlamm in Form von Magnesium-Ammonium-Phosphat (MAP, Struvit) zum Ziel.

Vorrichtungen und Verfahren für die Extraktion von Phosphor aus Abwasser sind im Stand der Technik bekannt.

Zur Unterstützung der MAP-Kristallisation werden teilweise Sand oder andere Mineralien (Crystalactor®-Prozess) verwendet. Beim P-RoC-Prozess (DE102011016826A1) erfolgt die Kristallisation phosphathaltiger Mineralphasen auf der Oberfläche von porösen CalciumSilikat-Hydrat-(CSH)-Substraten als Kristallisationssubstrat. Die Rückgewinnung des im Substrat enthaltenen Phosphors erfolgt als Calciumphosphat.

Die EP1496019 legt ein Verfahren und eine Vorrichtung für die Rückgewinnung von Phosphat in der Form von MAP-Kristallen aus Abwasser offen, bei dem das Abwasser hohe Konzentrationen organischer Substanz, Phosphor und Stickstoff enthält. Dieser Behandlungsprozess beinhaltet die biologische Behandlung eines Schlamm-Wasser-Gemisches, wobei unter gleichzeitiger Dosierung einer Magnesium-Quelle MAP-Kristalle geformt und deren Wachstum angeregt wird. Nach Abtrennung der MAP-Kristalle aus dem Ablauf des Reaktors wird zumindest ein Teil des Schlammes wieder zurück in den Reaktor geführt. Neben der Phosphor-Rückgewinnung wird in diesem Verfahren auch gleichzeitig die organische Fracht reduziert.

Die WO2014/003554A1 lehrt einen anaeroben Reaktor zur Herstellung und Sammlung von Struvit mit oben am Reaktor angeordneten Einläufen und einem Auslauf am Boden, wobei die Einläufe so ausgestaltet sind, dass eine Drehbewegung des Reaktorinhaltes beim Beschicken des Reaktors erzeugt wird und das gebildete Struvit durch Schaber am Boden zum Auslauf hin bewegt wird.

Auch in der EP 1786733B1 wird ein Verfahren gelehrt, das neben der Rückgewinnung von Phosphor den Abbau organischer Fracht zum Ziel hat. In diesem Verfahren läuft der Prozess unter aeroben Bedingungen ab, wobei durch die Wahl einer geeigneten hydraulischen Aufenthaltszeit das Wachstum nitrifizierender Bakterien minimiert wird, um so den für die Kristallisation von Magnesiumammoniumphosphat erforderlichen Reaktionspartner Ammonium in ausreichender Konzentration verfügbar zu haben bzw. nicht anderweitig zu verwerten.

Aus der WO2008/115758A1 ist ein Verfahren für die Entfernung von Phosphor und Ammonium aus einem wässrigen Strom bekannt. Der Phosphor enthaltende wässrige Strom wird in zwei bis fünf hintereinander geschalteten Stufen mit Lauge und Magnesium in Kontakt gebracht und dadurch die Ausfällung von Struvit initiiert. Das Struvit wird jeweils am Boden jeder Stufe abgezogen und in die vorherige Stufe eingeleitet. Der Phosphor enthaltende wässrige Strom wird im Gegenstrom von der ersten bis zur letzten Stufe geführt. Die einzelnen Stufen zeichnen sich durch einen im Vergleich zur Vorstufe steigenden pH-Wert aus, wobei die Erhöhung des pH-Wertes durch die Dosierung von Lauge erfolgt.

Aus der DE102007035910B4 ist ein Verfahren und eine Vorrichtung zur Rückgewinnung von Magnesiumammoniumphosphat bei der Klärschlammbehandlung bekannt. Die Vorrichtung besteht aus einem Reaktionsbehälter in den Faulschlamm eingebracht wird und dieser mit Luft vermischt wird. Durch Zugabe von Magnesiumchlorid wird das Ausfällen von Magnesiumammoniumphosphat initiiert. Durch den Lufteintrag wird einerseits das im Faulschlamm gelöste CO₂ ausgestrippt und so der pH-Wert angehoben. Es ist bekannt, dass die Fällungsreaktion bei höheren pH-Werten leichter abläuft. Gleichzeitig werden durch den Lufteintrag charakteristische Strömungsverhältnisse geschaffen, die es ermöglichen, dass die schweren MAP-Partikel sich in einer Beruhigungszone sammeln und von dort dem System entnommen werden können.

Die DE102011112780A1 offenbart ein Verfahren zur Behandlung von Klärschlamm mit den Behandlungsschritten Hydrolyse des Klärschlamms und der Faulung des der Hydrolyse unterzogenen hydrolysierten Klärschlamms zur anaeroben Behandlung des Klärschlamms sowie mit einem Schritt der Abtrennung von Phosphat aus dem mindestens teilweise behandelten Klärschlamms. Die Abtrennung von Phosphat erfolgt nach dem Behandlungsschritt der Hydrolyse und vor dem Behandlungsschritt der Faulung des hydrolysierten Klärschlamms, wobei der durch die Abtrennung von Phosphat um diesen abgetrennten Phosphatanteil verminderte Klärschlamm der anaeroben Behandlung durch Faulung zugeführt wird.

WO 2005/077834 A1 beschreibt einen Fluidbettreaktor für Abwasser, umfassend einen Reaktionstank mit drei oder mehr übereinander angeordneten Bereichen, deren Querschnittsfäche von unten nach oben zunimmt, einer Rezirkulationsschleife und einer Steuerung für die Regelung der chemischen Sättigungsverhältnisse im unteren Bereich des Reaktionstank.

WO 2012/119260 A1 betrifft ein System für die Behandlung von Abwasser mit einem Reaktortank mit drei oder mehr übereinander angeordneten Bereichen, wobei die Querschnittsfläche der Bereiche von unten nach oben zunimmt, Abwasser in einem unteren Bereich zugeführt und in dem Reaktortank rezirkuliert wird.

JP H11-290863 A offenbart eine Vorrichtung für die Abtrennung von Phosphor aus Abwasser mit einem Reaktortank für die Fällung von MAP-Kristallen (Magnesium-Ammonium-Phosphat-Kristallen), wobei in dem Reaktortank ein Bildsensor, insbesondere eine CCD-Kamera angeordnet ist, mittels derer die Größe und Suspension von MAP-Kristallen bestimmt wird.

Die bekannten Vorrichtungen und Verfahren weisen einen oder mehrere der folgenden Nachteile auf:
- erhebliche Ausschwemmung von phosphorhaltigen Feinkristallen;
- niedriger Extraktionsgrad für Phosphor, d. h. von dem im Abwasser enthaltenen Phosphor wird nur ein geringer Anteil von unter 50 % extrahiert;
- es wird lediglich Abwasser mit einem niedrigen Trockensubstanzgehalt TS < 3 %, wie insbesondere Schlammzentrat behandelt;
- Verwendung von wartungsintensiven strömungstechnischen Anlagenteilen;
- Einschränkungen bei der Wahl der Betriebsparameter;
- erhöhter Energieverbrauch.

Die vorliegende Erfindung hat die Aufgabe, eine Vorrichtung bereitzustellen, die es gestattet, Phosphor aus Abwasser mit einem Trockensubstanzgehalt von bis zu 7 % zu extrahieren. Insbesondere soll mit der Vorrichtung mehr als 50 % des in dem Abwasser enthaltenen Phosphors mit geringem Energieverbrauch extrahiert werden. Diese Aufgabe wird gelöst durch eine Vorrichtung, umfassend ein Fällungsmodul und ein Rückhaltemodul, wobei das Fällungsmodul einen Kristallisationsbehälter, einen oder mehrere in einem unteren Bereich des Fällungsmoduls angeordnete Einlässe und mindestens einen in einem oberen Bereich des Fällungsmoduls angeordneten Auslass umfasst, das Rückhaltemodul einen Sedimentationsbehälter, mindestens einen in einem oberen Bereich des Rückhaltemoduls angeordneten Einlass und mindestens einen in einem unteren Bereich des Rückhaltemoduls angeordneten Auslass umfasst, mindestens ein Auslass des Fällungsmoduls mit mindestens einem Einlass des Rückhaltemoduls und mindestens ein Auslass des Rückhaltemoduls mit mindestens einem Einlass des Fällungsmoduls verbunden ist, wobei das Volumen VS des Sedimentationsbehälters mindestens 60% des Volumens VK des Kristallisationsbehälters beträgt (VS ≥ 0,6·VK).

Vorteilhafte Ausführungsformen der erfindungsgemäßen Vorrichtung sind dadurch gekennzeichnet, dass
- das Fällungsmodul eine Zuleitung für von außen zugeführtes Abwasser umfasst, wobei die Zuleitung mit einem regelbaren Fluidantrieb ausgestattet ist;
- das Rückhaltemodul eine Ableitung für nach außen abgeführtes Abwasser umfasst, wobei die Ableitung mit einem regelbaren Fluidantrieb ausgestattet ist;
- die Vorrichtung einen Lüfter für die Einbringung von Luft in das Abwasser umfasst;
- der Lüfter ein Gebläse oder einen Kompressor umfasst;
- der Lüfter eine oder mehrere Auslassdüsen umfasst, wobei die mindestens eine Auslassdüse als feinporige Membran ausgebildet ist und vorzugsweise aus einem keramischen oder metallischen Werkstoff besteht;
- der Lüfter eine oder mehrere Auslassdüsen umfasst, wobei die mindestens eine Auslassdüse als feinporige Membran ausgebildet ist und Poren aufweist mit einem Durchmesser von ≤ 1000 µm, ≤ 500 µm oder ≤ 100 µm;
- der Lüfter eine oder mehrere Auslassdüsen umfasst, wobei die mindestens eine Auslassdüse in einer Leitung für die Zuführung von Abwasser aus dem Fällungsmodul in das Rückhaltemodul angeordnet ist;
- der Lüfter mit einer Leitung für die Zuführung von Abwasser aus dem Kristallisationsbehälter in den Sedimentationsbehälter verbunden ist;
- der Lüfter eine oder mehrere Auslassdüsen umfasst, wobei die mindestens eine Auslassdüse in einer Leitung für die Zuführung von Abwasser aus dem Kristallisationsbehälter in den Sedimentationsbehälter angeordnet ist;
- der Lüfter mit dem Kristallisationsbehälter und/oder mit dem Sedimentationsbehälter verbunden ist;
- der Lüfter eine oder mehrere Auslassdüsen umfasst, wobei die mindestens eine Auslassdüse in dem Kristallisationsbehälter und/oder in dem Sedimentationsbehälter angeordnet ist;
- der Lüfter eine oder mehrere Auslassdüsen umfasst, wobei die mindestens eine Auslassdüse in dem Sedimentationsbehälter angeordnet ist;
- der Lüfter dafür eingerichtet ist, in das Abwasser Luftblasen mit einem äquivalenten Durchmesser von ≤ 10 mm, ≤ 6 mm, ≤ 2 mm oder ≤ 1 mm einzubringen;
- das Verhältnis des Volumens VS des Sedimentationsbehälters zu dem Volumen VK des Kristallisationsbehälters größer/gleich 0,8 (VS/VK ≥ 0,8), größer/gleich 1 (VS/VK ≥ 1) oder größer/gleich 1,2 (VS/VK ≥ 1,2) ist;
- das Verhältnis des Volumens VS des Sedimentationsbehälters zu dem Volumen VK des Kristallisationsbehälters größer/gleich 2 (VS/VK ≥ 2), größer/gleich 3 (VS/VK ≥ 3) oder größer/gleich 4 (VS/VK ≥ 4) ist;
- das Verhältnis des Volumens VS des Sedimentationsbehälters zu dem Volumen VK des Kristallisationsbehälters zwischen 0,6 und 10 beträgt (0,6 ≤ VS/VK ≤ 10);
- der Kristallisationsbehälter ein Volumen von 10 bis 1000 m³ aufweist;
- der Sedimentationsbehälter ein Volumen von 6 bis 2000 m³ aufweist;
- eine maximale Querschnittsfläche QS des Sedimentationsbehälters größer/gleich einer maximalen Querschnittsfläche QK des Kristallisationsbehälters ist (QS ≥ QK);
- das Verhältnis der maximalen Querschnittsfläche QS des Sedimentationsbehälters zu der maximalen Querschnittsfläche QK des Kristallisationsbehälters größer/gleich 1,2 (QS/QK ≥ 1,2), größer/gleich 1,4 (QS/QK ≥ 1,4) oder größer/gleich 1,6 (QS/QK ≥ 1,6) ist;
- das Verhältnis der maximalen Querschnittsfläche QS des Sedimentationsbehälters zu der maximalen Querschnittsfläche QK des Kristallisationsbehälters größer/gleich 2 (QS/QK ≥ 2), größer/gleich 3 (QS/QK ≥ 3) oder größer/gleich 4 (QS/QK ≥ 4) ist;
- das Verhältnis der maximalen Querschnittsfläche QS des Sedimentationsbehälters zu der maximalen Querschnittsfläche QK des Kristallisationsbehälters zwischen 1 und 10 beträgt (1 ≤ QS/QK ≤ 10);
- der Kristallisationsbehälter eine maximale Querschnittsfläche von 7 bis 120 m² aufweist;
- der Sedimentationsbehälter eine maximale Querschnittsfläche von 7 bis 180 m² aufweist;
- der Kristallisationsbehälter mit einem oder mehreren Einlässen ausgestattet ist;
- der Kristallisationsbehälter mit einem oder mehreren Auslässen ausgestattet ist;
- der Kristallisationsbehälter mit einem Einlass für Abwasser ausgestattet ist;
- der Kristallisationsbehälter mit einem Einlass für aus dem Rückhaltemodul rückgeführtes Abwasser ausgestattet ist;
- der Kristallisationsbehälter mit einem Einlass für ein Magnesium-haltiges Reagenz, wie Magnesiumchlorid (MgCl₂) ausgestattet ist;
- der Kristallisationsbehälter mit einem Einlass für ein basisches Reagenz, wie Natronlauge (NaOH) ausgestattet ist;
- der Kristallisationsbehälter mit einem Auslass für die Ableitung von Abwasser in das Rückhaltemodul ausgestattet ist;
- der Kristallisationsbehälter zylinderförmig ausgebildet ist;
- der Kristallisationsbehälter einen unteren konusförmigen Teil und einen oberen zylinderförmigen Teil aufweist;
- der Sedimentationsbehälter mit einem oder mehreren Einlässen ausgestattet ist;
- der Sedimentationsbehälter mit einem oder mehreren Auslässen ausgestattet ist;
- der Sedimentationsbehälter mit einem Einlass für aus dem Fällungsmodul abgeführtes Abwasser ausgestattet ist;
- der Sedimentationsbehälter mit einem Einlass für aus dem Fällungsmodul abgeführtes Abwasser und einem Auslass für die Ableitung von Abwasser ausgestattet ist, wobei der Einlass und der Auslass in einem oberen Bereich des Sedimentationsbehälters und der Einlass in einer geringeren Höhe als der Auslass angeordnet ist;
- der Sedimentationsbehälter mit einem Auslass für die Rückführung von Abwasser in das Fällungsmodul ausgestattet ist;
- der Sedimentationsbehälter mit einem Auslass für die Ableitung von Abwasser in einen Hydrozyklon ausgestattet ist;
- der Sedimentationsbehälter mit einem Einlass für die Einleitung einer in einem Hydrozyklon separierten Abwasserfraktion ausgestattet ist;
- der Sedimentationsbehälter zylinderförmig ausgebildet ist;
- der Sedimentationsbehälter einen unteren konusförmigen Teil und einen oberen zylinderförmigen Teil aufweist;
- ein Auslass des Rückhaltemoduls über eine Rückführleitung mit mindestens einem Einlass des Fällungsmoduls verbunden und die Rückführleitung mit einem Fluidantrieb ausgerüstet ist;
- der Fluidantrieb der Rückführleitung elektronisch regelbar ist;
- der Fluidantrieb der Rückführleitung als Pumpe ausgebildet ist;
- die Vorrichtung eine unterhalb des Fällungsmoduls angeordnete Austrageinrichtung für die Entnahme von phosphorhaltigem Präzipitat aus dem Fällungsmodul umfasst;
- die Austrageinrichtung unterhalb des Kristallisationsbehälters angeordnet und mit diesem verbunden ist, wobei die Verbindung zwischen der Austrageinrichtung und dem Kristallisationsbehälter mit einem elektrisch oder pneumatisch stellbaren Ventil ausgestattet ist;
- die Austrageinrichtung eine mechanische Fördereinrichtung, beispielsweise eine Förderschnecke umfasst;
- die Austrageinrichtung eine hydraulische Fördereinrichtung, insbesondere eine Schleusenkammer umfasst;
- die Schleusenkammer mit einem Reservoir für Waschwasser für die Reinigung von phosphorhaltigem Präzipitat verbunden ist;
- ein unterer Bereich der Schleusenkammer konusfömig ausgebildet ist;
- das Fällungsmodul einen unterhalb des Kristallisationsbehälters angeordneten und mit diesem verbundenen Mischbehälter umfasst;
- der Mischbehälter mit einem oder mehreren Einlässen ausgestattet ist;
- der Mischbehälter mit einem oder mehreren Auslässen ausgestattet ist;
- der Mischbehälter mit einem Einlass für Abwasser ausgestattet ist;
- der Mischbehälter mit einem Auslass für die Einleitung von Abwasser in den Kristallisationsbehälter ausgestattet ist;
- der Mischbehälter mit einem Einlass für aus dem Rüclchaltemodul rückgeführtes Abwasser ausgestattet ist;
- der Mischbehälter mit einem Einlass für ein Magnesium-haltiges Reagenz, wie Magnesiumchlorid (MgCl₂) ausgestattet ist;
- der Mischbehälter mit einem Einlass für ein basisches Reagenz, wie Natronlauge (NaOH) ausgestattet ist;
- der Mischbehälter mit einem Auslass für die Ableitung von phosphorhaltigem Präzipitat in die Austrageinrichtung ausgestattet ist;
- die Austrageinrichtung unterhalb des Mischbehälters angeordnet und mit diesem verbunden ist, wobei die Verbindung zwischen der Austrageinrichtung und dem Mischbehälter mit einem elektrisch oder pneumatisch stellbaren Ventil ausgestattet ist;
- die Vorrichtung einen Gasabscheider umfasst, der über eine Zulaufleitung mit mindestens einem Einlass des Fällungsmoduls verbunden ist;
- der Gasabscheider mit einem Einlass für Abwasser ausgestattet ist;
- der Gasabscheider mit einem Auslass für entgastes Abwasser ausgestattet ist;
- die Vorrichtung einen Gasabscheider mit einem Einlass für Abwasser und einem Auslass für entgastes Abwasser, wobei der Auslass für entgastes Abwasser über eine oder mehrere Zulaufleitungen mit mindestens einem Einlass des Fällungsmoduls verbunden ist;
- der Gasabscheider als Vakuumentgaser ausgebildet ist und einen mit einer Vakuumpumpe oder einem Gebläse verbundenen Unterdruclcbehälter umfasst;
- der Gasabscheider als Belüftungsbehälter ausgebildet ist und in einem unteren Abschnitt mit einer oder mehreren Belüftungsdüsen ausgerüstet ist;
- der Gasabscheider als Belüftungsbehälter ausgebildet ist und ein Gebläse sowie eine oder mehrere, in einem unteren Abschnitt des Belüftungsbehälters angeordnete und mit dem Gebläse verbundene Belüftungsdüsen umfasst;
- der Gasabscheider als Rührbehälter oder Rieselkolonne ausgebildet ist;
- die Vorrichtung einen Vakuumentgaser und einen Belüftungsbehälter umfasst, wobei der Vakuumentgaser einen Einlass für Abwasser und einen Auslass für entgastes Abwasser umfasst, der Auslass des Vakuumentgasers mit einem Einlass des Belüftungsbehälters und ein Auslass des Belüftungsbehälters über eine oder mehrere Zulaufleitungen mit mindestens einem Einlass des Fällungsmoduls verbunden ist;
- die Vorrichtung einen Belüftungsbehälter und einen Vakuumentgaser umfasst, wobei der Belüftungsbehälter einen Einlass für Abwasser und einen Auslass für entgastes Abwasser umfasst, der Auslass des Belüftungsbehälters mit einem Einlass des Vakuumentgasers und ein Auslass des Vakuumentgasers über eine oder mehrere Zulaufleitungen mit mindestens einem Einlass des Fällungsmoduls verbunden ist;
- die Zulaufleitung von dem Gasabscheider zu dem Fällungsmodul mit einem elektronisch regelbaren Fluidantrieb ausgerüstet ist;
- das Rückhaltemodul einen Hydrozyklon umfasst, wobei ein Einlass des Hydrozyklons mit einem, in einem oberen Bereich des Sedimentationsbehälters angeordneten Auslass und ein Auslass des Hydrozyklons mit einem, in einem unteren Bereich des Sedimentationsbehälters angeordneten Einlass, mit der Rückführleitung oder mit einem Einlass des Fällungsmoduls verbunden ist;
- eine Verbindung zwischen dem Auslass des Sedimentationsbehälters und dem Einlass des Hydrozyklons mit einem Fluidantrieb ausgerüstet ist;
- ein Auslass des Hydrozyklons mit einem, in einem unteren Bereich des Sedimentationsbehälters angeordneten Einlass verbunden ist;
- ein Auslass des Hydrozyklons mit der Rückführleitung verbunden ist;
- ein Auslass des Hydrozyklons mit einem Einlass des Fällungsmoduls verbunden ist;
- die Vorrichtung einen Vorlagebehälter für ein magnesiumhaltiges Reagenz, wie beispielsweise Magnesiumchlorid (MgCl₂) umfasst, wobei der Vorlagebehälter mit einem Einlass des Fällungsmoduls verbunden ist und die Verbindung zwischen dem Vorlagebehälter und dem Fällungsmodul mit einer Dosiereinrichtung, beispielweise mit einer Dosierpumpe ausgestattet ist;
- die Vorrichtung einen Vorlagebehälter für ein basisches Reagenz, wie beispielsweise Natronlauge/Natriumhydroxid (NaOH) umfasst, wobei der Vorlagebehälter mit einem Einlass des Fällungsmoduls verbunden ist und die Verbindung zwischen dem Vorlagebehälter und dem Fällungsmodul mit einer Dosiereinrichtung, beispielweise mit einer Dosierpumpe ausgestattet ist;
- der Kristallisationsbehälter mit mindestens einem Sensor für die Messung des Präzipitatgehalts in dem Abwasser ausgerüstet ist;
- der Sensor für die Messung des Präzipitatgehalts als Ultraschallsensor ausgebildet ist;
- der Sensor für die Messung des Präzipitatgehalts als Radarsensor ausgebildet ist;
- der Kristallisationsbehälter mit einem Sensor für die Messung des Phosphatgehalts im Abwasser ausgerüstet ist;
- der Sedimentationsbehälter mit einem Sensor für die Messung des Phosphatgehalts im Abwasser ausgerüstet ist;
- der Kristallisationsbehälter mit einem Sensor für die Messung des pH-Wertes des Abwassers ausgerüstet ist;
- der Sedimentationsbehälter mit einem Sensor für die Messung des pH-Wertes des Abwassers ausgerüstet ist;
- der Kristallisationsbehälter mit einem Temperatursensor für die Messung der Temperatur des Abwassers ausgerüstet ist;
- der Sedimentationsbehälter mit einem Temperatursensor für die Messung der Temperatur des Abwassers ausgerüstet ist;
- die Vorrichtung eine elektronische Steuerung umfasst;
- die Steuerung als speicherprogrammierbare Steuerung (SPS) oder als PC-basierte Steuerung (Soft-SPS) ausgebildet ist;
- die elektronische Steuerung einen oder mehrere Eingänge für Sensoren für die Messung des Präzipitatgehalts, des Phosphatgehalts, des pH-Wertes und/oder der Temperatur des Abwassers umfasst;
- die elektronische Steuerung einen oder mehrere Ausgänge für die Ansteuerung von Fluidantrieben, Pumpen, Dosiereinrichtungen, Ventilen und mechanischen Komponenten, wie beispielsweise einer Förderschnecke umfasst;
- die elektronische Steuerung dafür eingerichtet ist, den Volumenstrom des der Vorrichtung von außen zugeführten Abwassers zu steuern;
- die elektronische Steuerung dafür eingerichtet ist, den Volumenstrom des aus der Vorrichtung nach außen abgeführten Abwassers zu steuern;
- die elektronische Steuerung dafür eingerichtet ist, den Volumenstrom des von dem Rückhaltemodul in das Fällungsmodul zurückgeführten Abwassers zu steuern;
- die elektronische Steuerung dafür eingerichtet ist, die Entnahme von Präzipitat aus dem Fällungsmodul anhand des Präzipitatgehalts in dem Kristallisationsbehälter zu steuern;
- die elektronische Steuerung dafür eingerichtet ist, die Entnahme von Präzipitat aus dem Fällungsmodul anhand des Phosphatgehalts im Abwasser zu steuern;
- die elektronische Steuerung dafür eingerichtet ist, die Entnahme von Präzipitat aus dem Fällungsmodul anhand des pH-Wertes des Abwassers zu steuern;
- die elektronische Steuerung dafür eingerichtet ist, die Entnahme von Präzipitat aus dem Fällungsmodul anhand des Phosphatgehalts und des pH-Wertes des Abwassers zu steuern;
- die elektronische Steuerung dafür eingerichtet ist, die Zufuhr und Dosierung eines magnesiumhaltigen Reagenz von dem Vorlagebehälter zu dem Fällungsmodul zu steuern; und/oder
- die elektronische Steuerung dafür eingerichtet ist, die Zufuhr und Dosierung eines basischen Reagenz von dem Vorlagebehälter zu dem Fällungsmodul zu steuern.

Im Weiteren hat die vorliegende Erfindung die Aufgabe, ein Verfahren bereitzustellen, das es gestattet, Phosphor aus Abwasser mit einem Trockensubstanzgehalt von bis zu 7 % zu extrahieren. Insbesondere soll mit dem Verfahren mehr als 50 % des in dem Abwasser enthaltenen Phosphors mit geringem Energieverbrauch extrahiert werden. Diese Aufgabe wird gelöst durch ein Verfahren, umfassend die Schritte Fällung von phosphorhaltigem Präzipitat in einem Kristallisationsbehälter in einer aufwärts gerichteten Abwasserströmung, Sedimentation von Präzipitat in einem Sedimentationsbehälter in einer abwärts gerichteten Abwasserströmung und Rückführung von Abwasser und Präzipitat von dem Sedimentationsbehälter in den Kristallisationsbehälter, wobei die hydraulische Aufenthaltszeit tS des Abwassers in dem Sedimentationsbehälter größer/gleich dem 0,6-fachen der hydraulischen Aufenthaltszeit tK des Abwassers in dem Kristallisationsbehälter (tS ≥ 0,6·tK) ist.

Vorteilhafte Ausführungsformen des erfindungsgemäßen Verfahrens sind dadurch gekennzeichnet, dass
- das Verhältnis der hydraulischen Aufenthaltszeit tS in dem Sedimentationsbehälter zur hydraulischen Aufenthaltszeit tK in dem Kristallisationsbehälter größer/gleich 0,8 (tS/tK ≥ 0,8), größer/gleich 1,0 (tS/tK ≥ 1,0) oder größer/gleich 1,2 (tS/tK ≥ 1,2) ist;
- das Verhältnis der hydraulischen Aufenthaltszeit tS in dem Sedimentationsbehälter zur hydraulischen Aufenthaltszeit tK in dem Kristallisationsbehälter größer/gleich 2 (tS/tK ≥ 2), größer/gleich 3 (tS/tK ≥ 3) oder größer/gleich 4 (tS/tK ≥ 4) ist;
- das Verhältnis der hydraulischen Aufenthaltszeit tS in dem Sedimentationsbehälter zur hydraulischen Aufenthaltszeit in dem Kristallisationsbehälter tK zwischen 0,6 und 10 beträgt (0,6 ≤ tS/tK ≤ 10);
- die hydraulische Aufenthaltszeit tK in dem Kristallisationsbehälter 2 bis 24 Stunden beträgt;
- die hydraulische Aufenthaltszeit tS in dem Sedimentationsbehälter 1,2 bis 36 Stunden beträgt;
- das Verhältnis der minimalen Geschwindigkeit GK der aufwärts gerichteten Abwasserströmung in dem Kristallisationsbehälter zu der minimalen Geschwindigkeit GS der abwärts gerichteten Abwasserströmung in dem Sedimentationsbehälter größer/gleich 1 (GK/GS ≥ 1), größer/gleich 2 (GK/GS ≥ 2), größer/gleich 3 (GK/GS ≥ 3) oder größer/gleich 4 (GK/GS ≥ 4) ist;
- das Verhältnis der minimalen Geschwindigkeit GK der aufwärts gerichteten Abwasserströmung in dem Kristallisationsbehälter zu der minimalen Geschwindigkeit GS der abwärts gerichteten Abwasserströmung in dem Sedimentationsbehälter zwischen 1 und 10 beträgt (1 ≤ GK/GS ≤ 10);
- im stationären Betrieb die minimale Geschwindigkeit GK der aufwärts gerichteten Abwasserströmung in dem Kristallisationsbehälter 0,5 m/h bis 10 m/h beträgt;
- im stationären Betrieb die minimale Geschwindigkeit GS der abwärts gerichteten Abwasserströmung in dem Sedimentationsbehälter 0,5 m/h bis 10 m/h beträgt;
- der Volumenstrom des der Vorrichtung von außen zugeführten Abwassers mittels einer elektronischen Steuerung und eines mit der Steuerung verbundenen Fluidantriebs geregelt wird;
- der Volumenstrom des aus der Vorrichtung nach außen abgeführten Abwassers mittels einer elektronischen Steuerung und eines mit der Steuerung verbundenen Fluidantriebs geregelt wird;
- der Volumenstrom des von dem Rückhaltemodul in das Fällungsmodul zurückgeführten Abwassers mittels einer elektronischen Steuerung und eines mit der Steuerung verbundenen Fluidantriebs geregelt wird;
- das Verhältnis des Volumenstroms des von dem Sedimentationsbehälter in den Kristallisationsbehälter rückgeführten Abwassers zu dem Volumenstrom des der Vorrichtung von außen zugeführten Abwassers 2 bis 100 beträgt;
- das Verhältnis des Volumenstroms des von dem Sedimentationsbehälter in den Kristallisationsbehälter rückgeführten Abwassers zu dem Volumenstrom des der Vorrichtung von außen zugeführten Abwassers 2 bis 15, 10 bis 30, 20 bis 40, 30 bis 50, 40 bis 60, 50 bis 70, 60 bis 80, 70 bis 90 oder 80 bis 100 beträgt;
- das Abwasser vor Einleitung in den Kristallisationsbehälter durch Unterdruckentgasung bzw. Vakuumentgasung und/oder Belüftung entgast wird;
- das Abwasser vor Einleitung in den Kristallisationsbehälter durch Rührentgasung oder Rieselung entgast wird;
- mittels eines Lüfters Luft, vorzugsweise in Form von Luftblasen in das Abwasser eingebracht wird;
- mittels eines Lüfters Luft, vorzugsweise in Form von Luftblasen in das in einer Verbindungsleitung von dem Fällungsmodul zu dem Rückhaltemodul geführte Abwasser eingebracht wird;
- mittels eines Lüfters Luft, vorzugsweise in Form von Luftblasen in das in einer Verbindungsleitung von dem Kristallisationsbehälter zu dem Sedimentationsbehälter geführte Abwasser eingebracht wird;
- mittels eines Lüfters Luft, vorzugsweise in Form von Luftblasen in das in dem Kristallisationsbehälter enthaltene Abwasser und/oder in das in dem Sedimentationsbehälter enthaltene Abwasser eingebracht wird;
- mittels eines Lüfters Luft, vorzugsweise in Form von Luftblasen in das in dem Sedimentationsbehälter enthaltene Abwasser eingebracht wird;
- die in das Abwasser eingebrachten Luftblasen einen äquivalenten Durchmesser von ≤ 10 mm, ≤ 6 mm, ≤ 2 mm oder ≤ 1 mm haben;
- das Verhältnis des Volumenstroms der in das Abwasser eingebrachten Luft zu dem Volumenstrom des der Vorrichtung von außen zugeführten Abwassers 0,02 bis 20 beträgt;
- das Verhältnis des Volumenstroms der in das Abwasser eingebrachten Luft zu dem Volumenstrom des der Vorrichtung von außen zugeführten Abwassers 0,02 bis 0,25; 0,2 bis 0,6; 0,4 bis 0,8; 0,6 bis 1,0; 0,8 bis 1,2; 1,0 bis 1,4; 1,2 bis 1,6; 1,4 bis 1,8 oder 1,6 bis 2,0 beträgt;
- das pro Zeiteinheit aus dem Sedimentationsbehälter in den Kristallisationsbehälter rückgeführte Abwasservolumen mittels eines regelbaren Fluidantriebs variiert wird;
- der Präzipitatgehalt des in dem Kristallisationsbehälter enthaltenen Abwassers gemessen und in Abhängigkeit von dem gemessenen Präzipitatgehalt das pro Zeiteinheit aus dem Sedimentationsbehälter in den Kristallisationsbehälter rückgeführte Abwasservolumen mittels eines regelbaren Fluidantriebs variiert wird;
- der Präzipitatgehalt des Abwassers in dem Kristallisationsbehälter gemessen und in Abhängigkeit von dem gemessenen Präzipitatgehalt, Präzipitat aus dem Kristallisationsbehälter entnommen wird;
- der Präzipitatgehalt des Abwassers in dem Kristallisationsbehälter kontinuierlich gemessen und bei Erreichen einer vorgegebenen Obergrenze, eine vorgegebene Präzipitatmenge aus dem Kristallisationsbehälter entnommen wird;
- der Präzipitatgehalt des Abwassers in dem Kristallisationsbehälter kontinuierlich gemessen und bei Erreichen einer vorgegebenen Obergrenze, kontinuierlich Präzipitat aus dem Kristallisationsbehälter entnommen wird, bis eine vorgegebene Untergrenze erreicht ist;
- der Präzipitatgehalt des Abwassers in dem Kristallisationsbehälter mittels eines Ultraschallsensors oder mittels eines Mikrowellensensors gemessen wird;
- der Präzipitatgehalt des Abwassers in dem Kristallisationsbehälter durch Messung der Position eines Phasenübergangs bzw. einer Trennschicht zwischen Abwasser und Abwassersediment bestimmt wird;
- der Präzipitatgehalt des Abwassers in dem Kristallisationsbehälter gemessen wird anhand der Laufzeit von Ultraschallpulsen, die von einem Phasenübergang bzw. einer Trennschicht zwischen Abwasser und Abwassersediment reflektiert werden;
- der pH-Wert des in dem Kristallisationsbehälter oder in dem Sedimentationsbehälter enthaltenen Abwassers gemessen wird;
- der Phosphatgehalt des in dem Kristallisationsbehälter oder in dem Sedimentationsbehälter enthaltenen Abwassers gemessen wird;
- in Abwasser, das dem Kristallisationsbehälter zugeführt wird, ein basisches Reagenz, wie beispielsweise Natronlauge (NaOH) dosiert wird;
- in Abwasser, das dem Kristallisationsbehälter zugeführt wird, ein Magnesium-haltiges Reagenz, wie beispielsweise Magnesiumchlorid (MgCl₂) dosiert wird;
- der pH-Wert des in dem Kristallisationsbehälter oder in dem Sedimentationsbehälter enthaltenen Abwassers gemessen und in Abhängigkeit von dem pH-Wert, in Abwasser, das dem Kristallisationsbehälter zugeführt wird, ein basisches Reagenz, wie beispielsweise Natronlauge (NaOH) dosiert wird;
- der pH-Wert des in dem Kristallisationsbehälter oder in dem Sedimentationsbehälter enthaltenen Abwassers gemessen und in Abhängigkeit von dem pH-Wert, in Abwasser, das dem Kristallisationsbehälter zugeführt wird, ein Magnesium-haltiges Reagenz, wie beispielsweise Magnesiumchlorid (MgCl₂) dosiert wird;
- der Phosphatgehalt des in dem Kristallisationsbehälter oder in dem Sedimentationsbehälter enthaltenen Abwassers gemessen und in Abhängigkeit von dem pH-Wert, in Abwasser, das dem Kristallisationsbehälter zugeführt wird, ein basisches Reagenz, wie beispielsweise Natronlauge (NaOH) dosiert wird;
- der Phosphatgehalt des in dem Kristallisationsbehälter oder in dem Sedimentationsbehälter enthaltenen Abwassers gemessen und in Abhängigkeit von dem pH-Wert, in Abwasser, das dem Kristallisationsbehälter zugeführt wird, ein Magnesium-haltiges Reagenz, wie beispielsweise Magnesiumchlorid (MgCl₂) dosiert wird;
- das in dem Kristallisationsbehälter enthaltene Abwasser einen Trockensubstanzgehalt TS von 1,5 bis 7 % (1,5 % ≤ TS ≤ 7 %) aufweist;
- das in dem Kristallisationsbehälter enthaltene Abwasser einen Trockensubstanzgehalt TS von 1,5 bis 4% (1,5% ≤ TS ≤ 4%), 3 bis 5 % (3 % ≤ TS ≤ 5 %), von 4 bis 6 % (4 % ≤ TS ≤ 6 %) oder von 5 bis 7 % (5 % ≤ TS ≤ 7 %) aufweist;
- das in dem Sedimentationsbehälter enthaltene Abwasser einen Trockensubstanzgehalt TS von 3 bis 7 % (3 % ≤ TS ≤ 7 %) aufweist; und/oder
- das in dem Sedimentationsbehälter enthaltene Abwasser einen Trockensubstanzgehalt TS von 1,5 bis 5 % (1,5 % ≤ TS ≤ 5 %), von 4 bis 6 % (4 % ≤ TS ≤ 6 %) oder von 5 bis 7 % (5 % ≤ TS ≤ 7 %) aufweist.

Der Troclcensubstanzgehalt TS von Abwasser, Rohschlamm, Klärschlamm, Faulschlamm oder Schlammzentrat wird gemäß dem Deutschen Einheitsverfahren zur Wasser-, Abwasser und Schlammuntersuchung ermittelt.Alternativ kann der Trockensubstanzgehalt TS von Abwasser, Rohschlamm, Klärschlamm, Faulschlamm oder Schlammzentrat ermittelt werden, indem
- eine Probe vorgebenen Volumens (beispielsweise 100 ml) entnommen und auf einer Analysenwaage gewogen wird, wobei das Gewicht der Probe mit m_{S} (Einheit [mg]) bezeichnet sei;
- ein sauberer, in einem Trockenschrank und einem Exsikkator gelagerter Filter auf einer Analysenwaage gewogen wird, wobei das Gewicht des sauberen Filters mit m_{F} (Einheit [mg]) bezeichnet sei;
- die Probe durch den Filter filtriert und der Filter in einer Mikrowelle, einem Trockenschrank oder mittels Infrarotlicht getrocknet wird;
- der Filter erneut gewogen wird, wobei das Gewicht des Filters mit der darauf abgeschiedenen Trockensubstanz mit m_{FT} (Einheiten [mg]) bezeichnet sei;
- der Trockensubstanzgehalt TS in Einheiten von % berechnet wird aus dem Verhältnis (m_{FT} - m_{F})/m_{S} multipliziert mit dem Faktor 100.

Allgemein wird kommunales Abwasser, Agrarabwasser und Abwasser aus der Tierhaltung zunächst mit mechanischen Mitteln, wie Rechen, metallischen Filtergittern und/oder einem Sandfang von grobpartikulären Inhaltsstoffen befreit. Anschließend wird das mechanisch geklärte Abwasser einem aeroben Klärbecken zugeführt und über eine Zeitspanne von wenigen Stunden bis zu einigen Tagen biologisch umgesetzt. Der nach aerober Behandlung erhaltene Klärschlamm (Rohschlamm) wird in einem Faulturm ausgefault und dann als anaerober stabilisierter Klärschlamm, respektive als Faulschlamm bezeichnet. Mit mechanischen Überlauf- und Filtervorrichtungen, Pressen oder Zentrifugen ggf. in Verbindung mit thermischer Zersetzung wird stabilisierter Klärschlamm und Faulschlamm in eine verdickte Schlammlcomponente und eine Komponente mit einem niedrigem Trockensubstanzgehalt von TS ≤ 0,5 %, das sogenannte Schlammzentrat getrennt.

Im Rahmen der vorliegenden Erfindung:
- werden Abwasser, Rohschlamm, stabilisierter Klärschlamm, Faulschlamm und Schlammzentrat subsumiert unter dem Begriff "Abwasser";
- bezeichnet der Begriff "hydraulische Aufenthaltszeit" das Verhältnis aus dem Volumen eines von Abwasser durchströmten Behälters - beispielsweise in der Einheit m³ - zu dem Volumenstrom (dV/dt) des Abwassers durch den Behälter - beispielsweise in der Einheit m³/h; in Fachkreisen werden anstelle von "hydraulischer Aufenthaltszeit" auch die Begriffe "Retentionszeit" bzw. "retention time" oder "residence time" verwendet;
- bezeichnet der Begriff "äquivalenter Durchmesser" eines Körpers den Durchmesser einer Kugel, die aus dem gleichen Stoff wie der betreffende Körper besteht und das gleiche Volumen wie der Körper aufweist;
- bezieht sich der Begriff "medianer" Wert auf ein Merkmal eines Ensembles, insbesondere eines Ensembles aus Partikeln, wobei bei 50 % der Ensemblemitglieder das betreffende Merkmal einen Wert aufweist, der größer als der mediane Wert ist und bei den verbleibenden 50 % der Ensemblemitglieder das Merkmal einen Wert aufweist, der kleiner/gleich dem medianen Wert ist;
- bezeichnen die Begriffe "phosphorhaltiges Präzipitat" und "Präzipitat" eine Mischung aus phosphorhaltigen Kristallen, wie beispielsweise Struvit, sonstigen Präzipitaten und "Abwasser"; insbesondere wird mit den Begriffen "phosphorhaltiges Präzipitat" und "Präzipitat" in dem Kristallisationsbehälter sowie in dem Sedimentationsbehälter gebildetes Sediment bezeichnet;
- bezeichnet der Begriff "Grobkorn" Präzipitat, das phosphorhaltige Kristalle enthält, wobei der mediane äquivalente Durchmesser der Kristalle ≥ 0,8 mm ist;
- bezeichnet der Begriff "Feinkorn" Präzipitat, das phosphorhaltige Kristalle enthält, wobei der mediane äquivalente Durchmesser der Kristalle < 0,8 mm ist.

Die Erfindung wird im Folgenden anhand von Figuren näher erläutert. Es zeigen
- Fig. 1a-1c: Blockdiagramme, welche die Anbindung der erfindungsgemäßen Vorrichtung an konventionelle Kläranlagen zeigen;
- Fig. 2: ein Blockdiagramm einer erfindungsgemäßen Vorrichtung mit Gasabscheider, Fällungs- und Rückhaltemodul;
- Fig. 3, 4: Ausführungsformen der erfindungsgemäßen Vorrichtung mit zusätzlichen Details;
- Fig. 5: eine Austrageinrichtung für die Entnahme von phosphorhaltigen Kristallen aus dem Fällungsmodul;
- Fig. 6: eine schematische Schnittzeichnung eines Kristallisations- und Sedimentationsbehälters; und
- Fig. 7: ein Schema einer elektronischen Steuerung für die Vorrichtung mit Sensoren und einem geregelten Fluidantrieb.

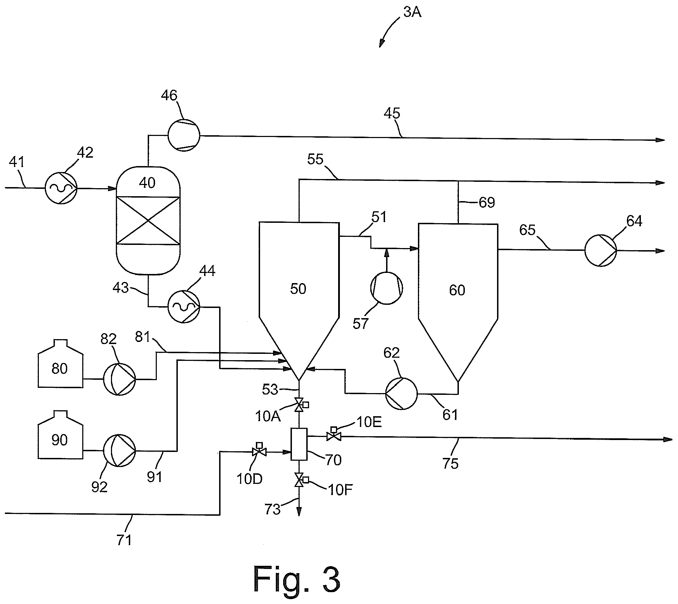

Die Figuren 3 - 7 zeigen beispielhafte Konfigurationen der erfindungsgemäßen Vorrichtung, anhand deren die Funktionsweise bestimmter Anlagenteile erläutert wird. Die erfindungsgemäßen Ausführungsformen der Vorrichtung sind jedoch nicht auf die in den Figuren 3 - 7 gezeigten Konfigurationen beschränkt. Die Vorrichtung ist modular aufgebaut und die Erfindung umfasst weitere Konfigurationen der betreffenden Anlagenteile, wie vorstehend dargelegt.

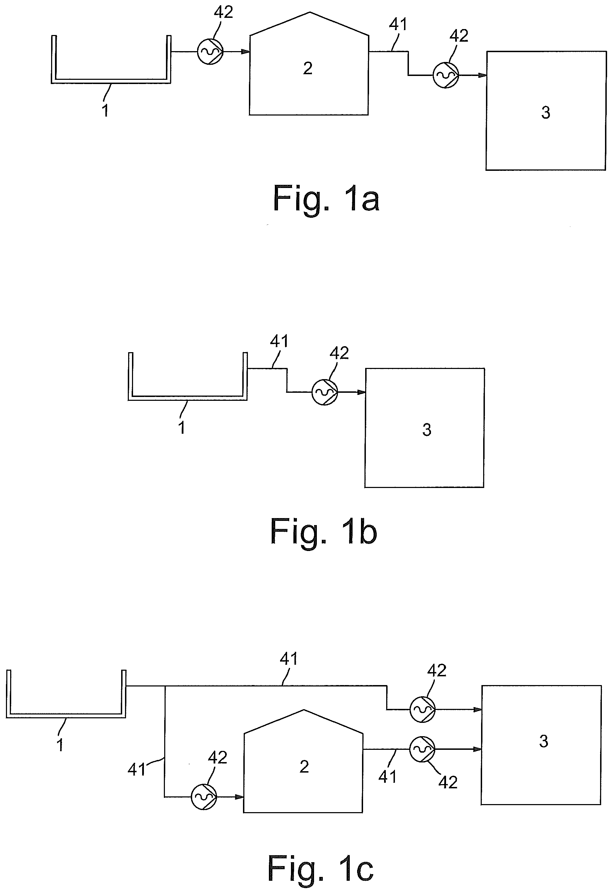

Fig. 1a zeigt ein Blockdiagramm einer Kläranlage mit einem Klärbecken 1 für die aerobe Abwasserbehandlung, einem Faulbehälter 2 oder Faulturm 2 für die anaerobe Abwasserbehandlung und einer erfindungsgemäßen Vorrichtung 3 für die Phosphorextraktion, wobei das Klärbecken 1 mit dem Faulturm 2 und der Faulturm 2 mit der Vorrichtung 3 fluidisch über Leitungen 41 verbunden sind. Zwecks Förderung des Abwassers kann jede der Verbindungsleitungen 41 mit einem Fluidantrieb 42, vorzugsweise einer Schneckenpumpe 42 ausgerüstet sein.

Fig. 1b zeigt ein Blockdiagramm einer anderen Kläranlage, die lediglich ein aerobes Klärbecken 1 und eine erfindungsgemäße Vorrichtung 3 umfasst, wobei das Klärbecken 1 über eine Leitung 41 mit der Vorrichtung 3 fluidisch verbunden ist und die Verbindungsleitung 41 ggf. mit einem Fluidantrieb 42, vorzugsweise mit einer Schneckenpumpe 42 ausgerüstet ist. Der aus dem Klärbecken 1 zugeführte aerobe Klärschlamm (Rohschlamm) ist weitgehend frei von Kohlendioxid und weist einen pH-Wert von 7,5 bis 8,5 auf, so dass in der erfindungsgemäßen Vorrichtung 3 ein Gasabscheider nicht erforderlich ist.

Fig. 1c zeigt eine weitere Kläranlage, in der ein aerobes Klärbecken 3 mit einem anaeroben Faulturm 2 und einer erfindungsgemäßen Vorrichtung 3 sowie der Faulturm 2 mit der Vorrichtung 3 jeweils über Leitungen 41 verbunden ist. Dementsprechend wird der erfindungsgemäßen Vorrichtung 3 zugleich Abwasser aus dem aeroben Klärbecken 3 und dem anaeroben Faulturm 2 zugeführt. Jede der Verbindungsleitungen 41 ist ggf. mit einem Fluidantrieb 42, vorzugsweise mit einer Schneckenpumpe 42 ausgerüstet.

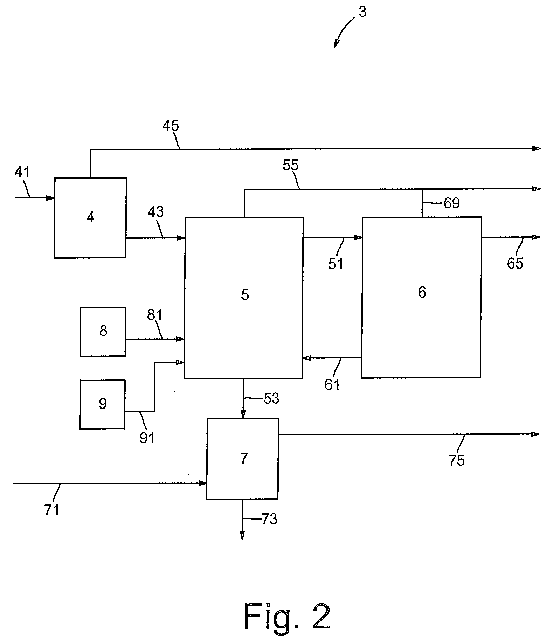

Fig. 2 zeigt ein schematisches Blockdiagramm einer erfindungsgemäßen Vorrichtung 3, umfassend einen Gasabscheider 4, ein Fällungsmodul 5, ein Rückhaltcmodul 6, einer Austrageinrichtung 7, einer Versorgungseinheit 8 für ein magnesiumhaltiges Reagenz und einer Versorgungseinheit 9 für ein basisches Reagenz. Aerob und/oder anaerob behandeltes Abwasser wird der Vorrichtung 3 bzw. dem Gasabscheider 4 über eine Leitung 41 von außen zugeführt. In dem Gasabscheider 4 werden in dem Abwasser gelöste Gase, insbesondere Kohlendioxid (CO₂) abgetrennt und über eine Leitung 45 abgeführt. Durch die Abtrennung von CO₂ wird der pH-Wert des Abwassers erhöht auf einen Wert von 7,5 bis 8,5. Das entgaste Abwasser wird von dem Gasabscheider 4 über eine Leitung 43 in das Fällungsmodul 5 geführt. In dem Fällungsmodul 5 werden in dem Abwasser enthaltene Phosphorverbindungen, insbesondere wasserlösliche Phosphate unter Zugabe eines magnesiumhaltigen Reagenz, wie beispielsweise Magnesiumchlorid (MgCl₂) sowie ggf. eines basischen Reagenz, wie beispielsweise Natronlauge (NaOH) präzipitiert in Form von phosphorhaltigen kristallinen Verbindungen, vorzugsweise in Form von Magnesiumammoniumphosphatkristallen (MAP) beziehungsweise Struvitkristallen mit der chemischen Formel (NH₄)Mg[PO₄]·6H₂O - nachfolgend als MAP oder Struvit bezeichnet. Das magnesiumhaltige Reagenz wird dem Fällungsmodul 5 von einer Versorgungseinheit 8 über eine Leitung 81 zugeführt. Optional umfasst die erfindungsgemäße Vorrichtung 3 eine weitere Versorgungseinheit 9 für das basische Reagenz, die über eine Leitung 91 mit dem Fällungsmodul 5 verbunden ist. Sofern das von außen zugeführte Abwasser einen ausreichend hohen pH-Wert aufweist - wie im Fall aeroben Klärschlamms (Rohschlamms) - ist der Gasabscheider 4 nicht erforderlich und kann entfallen.

In dem Fällungsmodul 5 werden zunächst kleine phosphorhaltige Kristallkeime gebildet, die im Rahmen der Erfindung als Feinkorn oder feinkörnige Kristalle bezeichnet werden. Unter geeigneten stöchiometrischen Verhältnissen wächst das Feinkorn während eines Zeitraums von 10 bis 24 Stunden zu Kristallen mit einem medianen äquivalenten Durchmesser von 0,4 bis 1 mm heran. Phosphorhaltige Kristalle mit einem medianen äquivalenten Durchmesser von ≥ 0,8 mm werden im Rahmen der Erfindung als Grobkorn oder grobkörnige Kristalle bezeichnet. Die grobkörnigen Kristalle sedimentieren in dem Fällungsmodul 5 und werden über eine Austrageinrichtung 7, die mit dem Fällungsmodul 5 über eine Leitung 53 verbunden ist, entnommen. Das Fällungsmodul 5 ist über eine Leitung 51 mit einem Rückhaltemodul 6 verbunden. In dem Rückhaltemodul 6 wird Feinkorn zurückgehalten und dessen Ausschwemmung aus der Vorrichtung 3 verhindert. Das Rückhaltemodul 6 ist über eine weitere Leitung 61 mit dem Fällungsmodul 5 verbunden, derart dass das Fällungsmodul 5 und das Rückhaltemodul 6 in Verbindung mit den Leitungen 51 und 61 eine fluidische Rezirkulationsschleife bilden. Das in der erfindungsgemäßen Vorrichtung 3 behandelte Abwasser wird über eine Leitung 65 aus dem Rückhaltemodul 6 bzw. aus der Vorrichtung 3 nach außen abgeführt. In einer zweckmäßigen Ausgestaltung der Vorrichtung 3 ist das Fällungsmodul 5 mit einer Leitung 55 und das Rückhaltemodul 6 mit einer Leitung 69 verbunden, über die in dem jeweiligen Modul freigesetzte Gase nach außen abgeführt werden.

Die Austrageinrichtung 7 ist über eine Leitung 71 mit einem, in Fig. 2 nicht gezeigten Reservoir für Waschwasser verbunden. Sofern erforderlich kann das aus dem Fällungsmodul 5 entnommene phosphorhaltige Präzipitat bzw. Grobkorn in der Austrageinrichtung 7 gereinigt werden. Zudem ist die Austrageinrichtung 7 mit einer Leitung 75 verbunden, über die verbrauchtes Waschwasser nach außen abgeführt werden kann. Phosphorhaltiges, in der Austrageinrichtung 7 ggf. gereinigtes Präzipitat wird über eine Leitung 73 aus der Austrageinrichtung 7 abgeführt.

Fig. 3 zeigt ein detailliertes Blockdiagramm einer erfindungsgemäßen Vorrichtung 3A, wobei übereinstimmende Bezugszeichen die gleiche Bedeutung und Funktion haben, wie vorstehend in Verbindung mit Fig. 2 beschrieben. Ein Gasabscheider umfasst einen Unterdruckbehälter 40, dem über eine Leitung 41 von außen Abwasser zugeführt wird. In einer zweckmäßigen Ausführungsform der Vorrichtung 3A ist die Leitung 41 mit einem Fluidantrieb 42, vorzugsweise einer Schneckenpumpe 42 ausgerüstet. Mittels einer Vakuumpumpe 46 oder eines Gebläses 46 wird in dem Unterdruckbehälter 40 ein Unterdruck von 20 bis 60 kPa erzeugt, um in dem Abwasser gelöste Gase, insbesondere Kohlendioxid (CO₂) abzutrennen und über eine Leitung 45 nach außen abzuführen. Durch die Abtrennung von Kohlendioxid (CO₂) wird der pH-Wert des Abwassers angehoben auf einen Wert von 7,5 bis 8,5. Ein Fällungsmodul umfasst einen Kristallisationsbehälter 50. Aus dem Unterdruckbehälter 40 wird entgastes Abwasser über eine Leitung 43, die ggf. mit einem Fluidantrieb 42, insbesondere mit einer Schneckenpumpe 42 ausgerüstet ist, in einen unteren Bereich des Kristallisationsbehälters 50 geführt. Eine Versorgungseinheit für ein magnesiumhaltiges Reagenz, wie beispielweise Magnesiumchlorid (MgCl₂) ist über eine Leitung 81 mit einem unteren Bereich des Kristallisationsbehälters 50 verbunden und umfasst einen Vorlagebehälter 80 und eine Dosiereinrichtung 82, vorzugweise eine Dosierpumpe 82. Optional umfasst die Vorrichtung 3 eine weitere Versorgungseinheit für ein basisches Reagenz, wie beispielsweise Natronlauge (NaOH), die über eine Leitung 91 mit einem unteren Bereich des Kristallisationsbehälters 50 verbunden ist und einen Vorlagebehälter 90 und eine Dosiereinrichtung 92, vorzugsweise eine Dosierpumpe 92 umfasst.

Eine Austrageinrichtung für die Entnahme von phosphorhaltigem Präzipitat bzw. Grobkorn ist unterhalb des Kristallisationsbehälters 50 angeordnet und mit diesem über eine Leitung 53 verbunden. Die Austrageinrichtung umfasst eine Schleusenkammer 70 und mehrere Ventile, die vorzugsweise elektrisch oder pneumatisch stellbar sind. In der in Fig. 3 gezeigten Ausführungsform der erfindungsgemäßen Vorrichtung 3A umfasst die Austrageinrichtung vier Ventile 10A, 10D, 10E, 10F. Das Ventil 10A ist in der, den Kristallisationsbehälter 50 mit der Schleusenkammer 70 verbindenden Leitung 53 angeordnet. Die Schleusenkammer 70 ist über eine mit dem Ventil 10D ausgestattete Leitung 71 mit einem in Fig. 3 nicht gezeigten Reservoir für Waschwasser verbunden. Die Leitung 71 mündet vorzugsweise in einen unteren Bereich der Schleusenkammer 70. Für die Abführung von verbrauchtem Waschwasser aus der Schleusenkammer 70 ist eine mit dem Ventil 10E ausgestattete Leitung 75 vorgesehen. Die Leitung 75 ist vorzugweise mit einem oberen Bereich der Schleusenkammer 70 verbunden. Zudem ist ein unterer Bereich der Schleusenkammer 70 mit einer Leitung 73 für die Entnahme von phosphorhaltigem Präzipitat verbunden. Die Leitung 73 ist mit dem Ventil 10F ausgerüstet. Im stationären Betrieb der erfindungsgemäßen Vorrichtung 3 sind die Ventile 10A, 10D, 10E, 10F geschlossen. Die Schleusenkammer 10 ist je nach Betriebsvorgabe wahlweise leer oder mit Waschwasser gefüllt. Zu steuerungstechnisch bestimmten Zeitpunkten wird das Ventil 10A geöffnet, so dass phosphorhaltiges Präzipitat, insbesondere Grobkorn, ggf. vermischt mit Abwasser von dem Kristallisationsbehälter 50 in die Schleusenkammer 70 sinkt bzw. strömt. Zu einem späteren, ebenfalls steuerungstechnisch bestimmten Zeitpunkt wird das Ventil 10A geschlossen und danach die Ventile 10D und 10E geöffnet und das in der Schleusenkammer 70 befindliche phosphorhaltige Präzipitat mit Waschwasser gereinigt. Nach erfolgter Reinigung werden die Ventile 10D und 10E geschlossen und das Ventil 10F geöffnet, sodass gereinigtes Präzipitat vermengt mit in der Schleusenkammer 70 verbliebenem Waschwasser über die Leitung 73 abrieseln bzw. abfließen kann.

Ein oberer Bereich des Kristallisationsbehälters 50 ist über eine Leitung 51 fluidisch mit einem oberen Bereich eines Sedimentationsbehälters 60 verbunden.

Vorzugsweise umfasst die Vorrichtung 3A einen Lüfter, mit dem feinperlige Luftblasen mit einem äquivalenten Durchmesser von ≤ 10 mm, ≤ 6 mm, ≤ 2 mm und insbesondere ≤ 1 mm in das Abwasser eingebracht werden können. Die feinperligen Luftblasen heften sich an die im Abwasser enthaltene organische Trockensubstanz und fördern deren Flotation im Sedimentationsbehälter 60. Erfindungsgemäß wird der Lüfter derart betrieben, dass das Verhältnis des Volumenstroms der in das Abwasser eingebrachten feinperligen Luft zu dem Volumenstrom des der Vorrichtung von außen zugeführten Abwassers 0,02 bis 0,3; 0,2 bis 2; 0,2 bis 0,6; 0,4 bis 0,8; 0,6 bis 1,0; 0,8 bis 1,2; 1,0 bis 1,4; 1,2 bis 1,6; 1,4 bis 1,8 oder 1,6 bis 2,0 beträgt. Der Lüfter umfasst einen Kompressor 57 oder ein Gebläse 57 und eine oder mehrere, in Fig. 3 nicht gezeigte Auslassdüsen, wobei die mindestens eine Auslassdüse als feinporige Membran ausgebildet ist und Poren aufweist mit einem Durchmesser von ≤ 1000 µm, ≤ 500 µm und insbesondere ≤ 100 µm. Die feinporige Membran der mindestens einen Auslassdüse des Lüfters ist vorzugsweise aus einem keramischen oder metallischen Werkstoff gefertigt. Die Auslassdüsen des Lüfters sind in dem Kristallisationsbehälter 50 und/oder in dem Sedimentationsbehälter 60 angeordnet. Vorzugsweise ist die mindestens eine Auslassdüse in der den Kristallisationsbehälter 50 mit dem Sedimentationsbehälter 60 verbindenden Leitung 51 angeordnet.

In einer besonders bevorzugten Ausführungsform der Vorrichtung 3A mündet die Leitung 51 in den oberen Bereich des Sedimentationsbehälters 60 in einer geringeren Höhe als ein in dem oberen Bereich des Sedimentationsbehälters angeordneter Auslass für die Ableitung von Abwasser und flotierter Trockensubstanz. Die Höhendifferenz zwischen dem Auslass und Einlass entspricht einer Steigstrecke und dient zur verbesserten Trennung von phosphorhaltigem Präzipitat und flotierender Trockensubstanz.

Ein unterer Bereich des Sedimentationsbehälters 60 ist über eine Leitung 61 fluidisch mit einem unteren Bereich des Kristallisationsbehälters 50 verbunden, wobei die Leitung 61 mit einem Fluidantrieb 62, vorzugsweise mit einer Schnecken- oder Drehkolbenpumpe 62 ausgestattet ist. Zweckmäßig ist der Fluidantrieb 62 elektrisch regelbar. Der Kristallisationsbehälter 50 und der Sedimentationsbehälter 60 in Verbindung mit den Leitungen 51 und 61 bildet eine fluidische Rezirkulationsschleife, wobei der Volumenstrom des rezirkulierenden Abwassers mittels des regelbaren Fluidantriebs 62 variiert werden kann.

Unter geeigneten stöchiometrischen Verhältnissen werden in dem Abwasser, das zwischen dem Kristallisationsbehälter 50 und dem Sedimentationsbehälter 60 zirkuliert, phosphorhaltige Kristallkeime gebildet, die über einen Zeitraum von 10 bis 24 Stunden zu grobkörnigen Kristallen mit einem äquivalenten Durchmesser von 0,4 bis 1 mm heranwachsen. Die grobkörnigen Kristalle werden von dem im Kristallisationsbehälter 50 aufwärts strömenden Abwasser nicht mitgeführt, weil die auf sie einwirkende Schwerkraft die Stokes'sche Reibungskraft überwiegt. Dementsprechend sedimentieren die grobkörnigen Kristalle in dem Kristallisationsbehälter 50. Die feinkörnigen Kristalle mit einem äquivalenten Durchmesser von etwa < 0,8 mm hingegen werden durch die aufwärts gerichtete Abwasserströmung im Kristallisationsbehälter 50 nach oben befördert, über die Leitung 51 in den Sedimentationsbehälter 60 geschwemmt, im Sedimentationsbehälter 60 durch die abwärts gerichtete Abwasserströmung nach unten transportiert und schließlich über die Leitung 61 in den Kristallisationsbehälter 50 zurückgeführt. Nach hinreichender Verweilzeit in der zwischen dem Kristallisationsbehälter 50 und dem Sedimentationsbehälter 60 rezirkulierenden Abwasserströmung wachsen die Kristalle auf eine Größe mit einem äquivalenten Durchmesser von 1 bis 2 mm und sedimentieren im Kristallisationsbehälter 50. In dem Sedimentationsbehälter 60 werden die feinkörnigen Kristalle von der im Abwasser enthaltenen Trockensubstanz getrennt, wobei ein erheblicher Anteil der Trockensubstanz mit einer Dichte von < 1 g/cm³ flotiert und sich im oberen Bereich des Sedimentationsbehälters 60 ansammelt und über eine Leitung 65 nach außen abgeführt wird. Zweckmäßig ist die Ableitung 65 mit einem Fluidantrieb 64, insbesondere mit einer Schnecken- oder Drehkolbenpumpe 64 ausgerüstet. Vorzugsweise ist der Fluidantrieb 64 bzw. die Schnecken- oder Drehkolbenpumpe 64 elektrisch regelbar. Ein Teil der in dem Abwasser enthaltenen Trockensubstanz kann eine Dichte von > 1 g/cm³ aufweisen. Derartige in Abwasser gelöste Trockensubstanz wird in Fachkreisen auch als Sinkschlamm bezeichnet. Sofern vorhanden, kann Sinkschlamm mittels des vorstehend beschriebenen Lüfters bzw. durch Eindüsung feinperliger Luft im Sedimentationsbehälter 60 flotiert und nach außen abgeführt werden.

In einer zweckmäßigen Ausgestaltung der Vorrichtung 3A ist der obere Bereich des Kristallisationsbehälters 50 mit einer Leitung 55 und der obere Bereich des Sedimentationsbehälters 60 mit einer Leitung 69 verbunden, über die in dem jeweiligen Behälter freigesetzte Gase nach außen abgeführt werden.

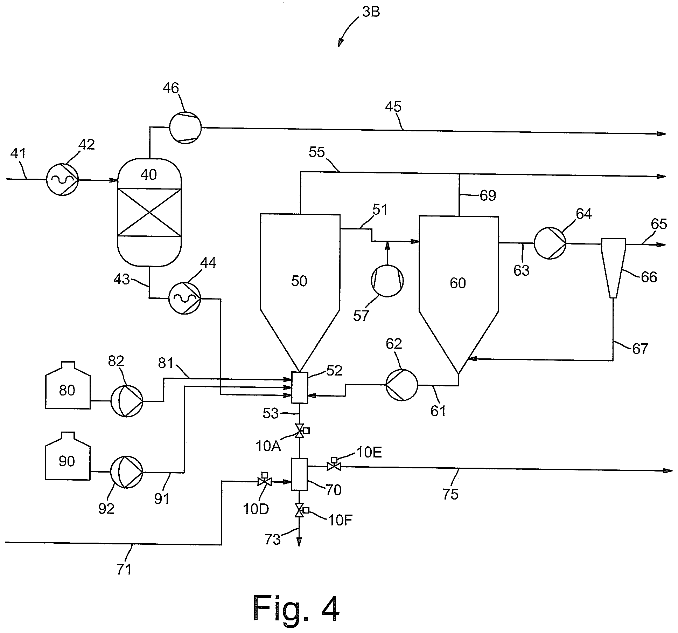

Fig. 4 zeigt eine weitere erfindungsgemäße Vorrichtung 3B, wobei übereinstimmende Bezugszeichen die gleiche Bedeutung und Funktion haben, wie vorstehend in Verbindung mit Fig. 3 beschrieben.

Die Vorrichtung 3B unterscheidet sich von der in Fig. 3 gezeigten Vorrichtung 3A dadurch, dass das Fällungsmodul einen unterhalb des Kristallisationsbehälters 50 angeordneten und mit diesem fluidisch verbundenen Mischbehälter 52 umfasst. Die Leitung 43 für die Zuführung von Abwasser aus dem Gasabscheider bzw. dem Unterdruckbehälter 40, die Leitung 81 für die Zuführung eines magnesiumhaltigen Reagenz aus dem Vorlagebehälter 80, optional die Leitung 91 für die Zuführung eines basischen Reagenz aus dem Vorlagebehälter 90 sowie die Leitung 61 für die Rückführung von Abwasser und Präzipitat aus dem Sedimentationsbehälter 60 sind jeweils mit dem Mischbehälter 52 verbunden. Der Mischbehälter 52 weist ein im Vergleich zum Kristallisationsbehälter 50 um einen Faktor von 1000 bis 50.000 kleineres Volumen auf und gewährleistet eine intensive und hochgradig turbulente Vermischung des aus dem Gasabscheider bzw. Unterdruckbehälter 40 und dem Sedimentationsbehälter 60 zugeführten Abwassers mit dem magnesiumhaltigen Reagenz und optional mit dem basischen Reagenz.

Im Weiteren unterscheidet sich die Vorrichtung 3B von der in Fig. 3 gezeigten Vorrichtung 3A dadurch, dass das Rückhaltemodul einen dem Sedimentationsbehälter 60 nachgeordneten Hydrozyklon 66 umfasst. Wie in Fig. 4 gezeigt, ist ein Einlass des Hydrozyklons 66 über eine Leitung 63 mit einem im oberen Bereich des Sedimentationsbehälters 60 angeordneten Auslass verbunden. Zweckmäßig ist in der Leitung 63 ein Fluidantrieb 64, insbesondere eine Schnecken- oder Drehkolbenpumpe 64 angeordnet, die es ermöglicht, die Strömungsgeschwindigkeit des dem Hydrozyklon 66 zugeführten Abwassers zu erhöhen. Ein erster Auslass des Hydrozyklons 66 für eine leichte Abwasserfraktion mit einem hohen Gehalt an Trockensubstanz ist mit einer Leitung 65 verbunden. Über die Leitung 65 wird die in dem Hydrozyklon 66 abgetrennte leichte Abwasserfraktion nach außen abgeführt. Ein zweiter Auslass des Hydrozyklons 66 für eine schwere Abwasserfraktion mit einem hohen Gehalt an phosphorhaltigem Präzipitat ist über eine Leitung 67 mit einem unteren Bereich des Sedimentationsbehälters 60 verbunden. Über die Leitung 67 wird in dem Hydrozyklon 66 abgetrenntes Präzipitat in den Sedimentationsbehälter 60 zurückgeführt.

Im Weiteren umfasst die Erfindung alternative Ausführungsformen der Vorrichtungen 3A und 3B, die wahlweise einen Mischbehälter 52 oder einen Hydrozyklon 66 umfassen.

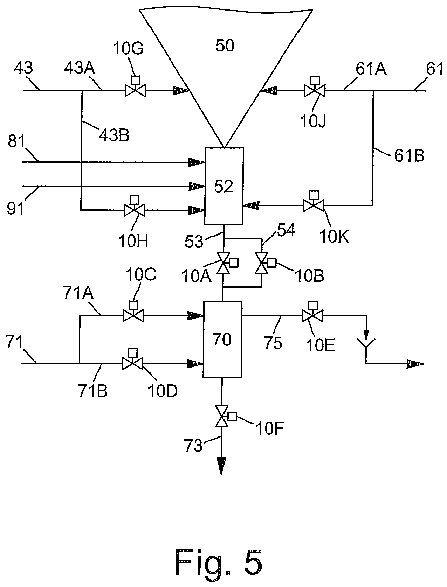

Fig. 5 zeigt eine Teilansicht einer erfindungsgemäßen Vorrichtung mit einer vorteilhaften Ausführungsform einer Austrageinrichtung für die Entnahme von phosphorhaltigem Präzipitat aus einem Fällungsmodul bzw. einem Kristallisationsbehälter, wobei übereinstimmende Bezugszeichen die gleiche Bedeutung und Funktion haben, wie vorstehend in Verbindung mit Fig. 3 und 4 beschrieben. In Fig. 5 ist eine Teilansicht einer erfindungsgemäßen Vorrichtung 3B - wie vorstehend in Verbindung mit Fig. 4 erörtert - dargestellt, in welcher das Fällungsmodul zusätzlich zu einem Kristallisationsbehälter 50 einen Mischbehälter 52 sowie weitere Leitungen 43A, 43B, 61A, 61B und Ventile 10G, 10H, 10J, 10K umfasst. Eine Leitung 81 für die Zuführung eines magnesiumhaltigen Reagenz, wie beispielsweise Magnesiumchlorid (MgCl₂) und optional eine Leitung 91 für die Zuführung eines basischen Reagenz, wie beispielsweise Natronlauge (NaOH) sind mit dem Mischbehälter 52 verbunden. Die nachfolgend beschriebene Austrageinrichtung kann jedoch in analoger Weise in einer Vorrichtung 3A - wie vorstehend in Verbindung mit Fig. 3 erörtert - ohne den Mischbehälter 52 eingesetzt werden, wobei die Leitungen 43B, 61B und die Ventile 10H und 10K entfallen und die Leitungen 81 und ggf. 91 mit einem unteren Bereich des Kristallisationsbehälters 50 verbunden sind. Der Mischbehälter 52 bzw. der Kristallisationsbehälter 50 ist über eine Leitung 53 mit einer Schleusenkammer 70 der erfindungsgemäßen Austrageinrichtung verbunden. Die Leitung 53 ist mit einem Ventil 10A und vorzugsweise mit einer Bypassleitung 54 mit einem Ventil 10B ausgestattet. Eine Leitung 71 dient zur Zuführung von Waschwasser aus einem in Fig. 5 nicht gezeigten Reservoir zu der Schleusenkammer 70. Die Leitung 71 verzweigt in die Leitungen 71 A und 71B, die jeweils mit einem stellbaren Ventil 10C, respektive 10D ausgestattet und mit einem oberen Bereich, respektive einem unteren Bereich der Schleusenkammer 70 verbunden sind. Ein unterer Bereich der Schleusenkammer 70 ist mit einer, mit einem stellbaren Ventil 10F ausgestatteten Leitung 73 verbunden. Ein oberer Bereich der Schleusenkammer 70 ist mit Leitung 75 für die Abführung von gebrauchtem Waschwasser verbunden. Die Leitung 75 ist ebenfalls mit einem stellbaren Ventil 10E ausgestattet.

Vorzugsweise sind die Ventile 10A, 10B, 10C, 10D, 10E, 10F, 10G, 10H, 10J, 10K unabhängig voneinander elektrisch oder pneumatisch stellbar und mit einer in Fig. 5 nicht gezeigten elektronischen Steuerung verbunden.

Im regulären Betrieb der Vorrichtung sind die Ventile 10G, 10J, 10A, 10B, 10C, 10D, 10E geschlossen und die Ventile 10H, 10K geöffnet, wobei dem Mischbehälter 52 über die Leitungen 43, 43B und 61, 61B Abwasser von einem Gasabscheider, respektive von einem Rückhaltemodul zugeführt wird und von dem Mischbehälter 52 aufwärts in den Kristallisationsbehälter 50 strömt. Je nach gewünschter Betriebsweise ist die Schleusenkammer 70 leer oder mit Waschwasser gefüllt. Zur Entnahme von phosphorhaltigem Präzipitat aus dem Kristallisationsbehälter 50 werden die Ventile 10H, 10K geschlossen und das Ventil 10A geöffnet. Aus dem Mischbehälter 52 sinkt oder fließt nun Präzipitat über die Leitung 53 in die Schleusenkammer 70. Nach einem vorgegebenen Zeitintervall wird das Ventil 10A wieder geschlossen und die Ventile 10D, 10E geöffnet, so dass über die Leitungen 71, 71B Waschwasser in den unteren Bereich der Schleusenkammer 70 strömt und über die Leitung 75 aus dem oberen Bereich der Schleusenkammer 70 nach außen abfließt. Mittels des in der Schleusenkammer von unten nach oben strömenden Waschwassers wird das Präzipitat von Trockensubstanz gereinigt. Nach einem vorgegebenen Zeitintervall werden die Ventile 10D, 10E wieder geschlossen und die Ventile 10C, 10F geöffnet, so dass über die Leitungen 71, 71A Waschwasser in den oberen Bereich der Schleusenkammer 70 fließt. Von dem oberen Bereich der Schleusenkammer 70 strömt das Waschwasser abwärts und spült das darin enthaltene, gereinigte Präzipitat über die Leitung 73 in einen in Fig. 5 nicht gezeigten Sammelbehälter. Nach dem Austrag des Präzipitats aus der Schleusenkammer 70 werden die Ventile 10C, 10F geschlossen. Je nach gewünschter Betriebsweise wird zunächst das Ventil 10C und nachfolgend mit einem geringen Zeitversatz das Ventil 10F geschlossen, so dass die Schleusenkammer 70 leer bleibt. Alternativ wird zunächst das Ventil 10F und nachfolgend mit einem geringen Zeitversatz das Ventil 10C geschlossen, so dass die Schleusenkammer 70 mit Waschwasser gefüllt wird. Hierbei kann optional das Ventil 10B geöffnet werden, so dass Waschwasser über die Bypassleitung 54 in den Mischbehälter 52 steigt. Nach einem vorgegebenen Zeitintervall werden die Ventile 10B, 10C wieder geschlossen und die Ventile 10A, 10F für ein vorgegebenes Zeitintervall geöffnet, so dass in den Mischbehälter 52 gelangtes Waschwasser über die Leitung 53, die Schleusenkammer 70 und die Leitung 73 abfließt und in der Leitung 53 verbliebenes Präzipitat in den Sammelbehälter austragen wird. Hierauf werden die Ventile 10A und 10 F wieder geschlossen und - sofern gewünscht - durch temporäres Öffnen des Ventils 10C die Schleusenkammer 70 wiederum mit Waschwasser gefüllt.

Während der temporären Nutzung der Austrageinrichtung sind die Ventile 10H, 10K geschlossen, wobei die Ventile 10G, 10J je nach gewünschter Betriebsweise unabhängig voneinander wahlweise geöffnet oder geschlossen sein können. Sind die Ventile 10G, 10J geöffnet, so wird dem Kristallisationsbehälter 50 weiterhin Abwasser von einem Gasabscheider, respektive von einem Rückhaltemodul zugeführt.

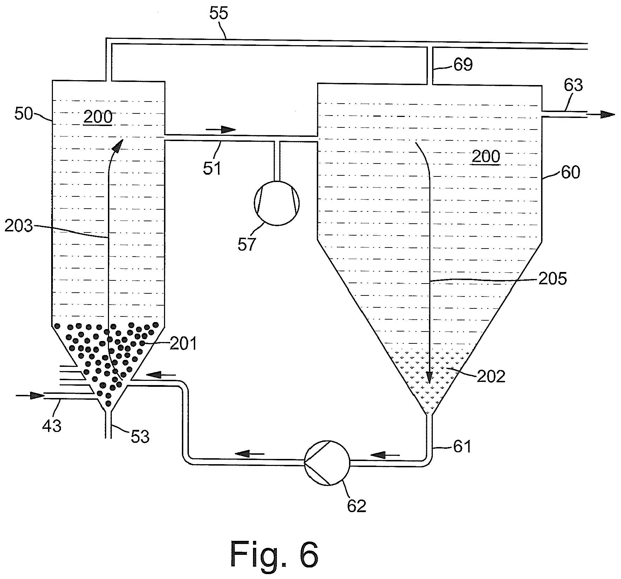

Fig. 6 zeigt eine andere Teilansicht einer erfindungsgemäßen Vorrichtung, wobei übereinstimmende Bezugszeichen die gleiche Bedeutung und Funktion haben, wie vorstehend im Zusammenhang mit Fig. 3 und 4 beschrieben. Ein oberer Bereich eines Kristallisationsbehälters 50 ist über eine Leitung 51 mit einem oberen Bereich eines Sedimentationsbehälters 60 verbunden. Ein unterer Bereich des Sedimentationsbehälters 60 ist über eine Leitung 61 mit einem unteren Bereich des Kristallisationsbehälters 50 verbunden, wobei die Leitung 61 mit einem Fluidantrieb 62, vorzugsweise einer Schnecken-oder Drehkolbenpumpe 62 ausgestattet ist. Der Kristallisationsbehälter 50, der Sedimentationsbehälter 60 und die Leitungen 51, 61 bilden eine fluidische Rezirkulationsschleife für Abwasser 200. In dem Kristallisationsbehälter 50 strömt das Abwasser aufwärts und in dem Sedimentationsbehälter 60 abwärts, wie durch den Pfeil 203, respektive den Pfeil 205 angezeigt. In der jeweiligen Strömung 203 und 205 wird feinkörniges Präzipitat 202 aufgrund von Reibungskräften (Stokes'sches Prinzip) mitgeführt und sedimentiert in dem unteren Bereich des Sedimentationsbehälters 60. Für grobkörniges Präzipitat 201 überwiegt die Schwerkraft die Stokes'sche Reibungskraft. Dementsprechend wird grobkörniges Präzipitat 201 im unteren Bereich des Kristallisationsbehälters 50 akkumuliert. Ggf. aufgrund Kristallwachstums im Sedimentationsbehälter 60 gebildetes grobkörniges Präzipitat wird durch die Stokes'schen Reibungskraft, die hierzu gleich gerichtete Schwerkraft und den Fluidantrieb 62 in den Kristallisationsbehälter 50 transportiert. Der Kristallisationsbehälter 50 und der Sedimentationsbehälter 60 haben einen unteren konusförmigen Bereich und einen oberen zylinderförmigen Bereich, wobei die maximale Querschnittsfläche QK bzw. QS jeweils durch die Beziehung QK = π·DK²/4 und QS = π·DS²/4 gegeben ist, worin DK und DS den Durchmesser des zylinderförmigen oberen Bereichs des Kristallisationsbehälters 50, respektive des Sedimentationsbehälters 60 bezeichnen. Mit den beispielhaften Größenverhältnissen der Fig. 6 ist das Verhältnis der maximalen Querschnittsflächen QS/QK = 4. Das Verhältnis des Volumens VS des Sedimentationsbehälters 60 zu dem Volumen VK des Kristallisationsbehälters 50 hat für die beispielhaften Größenverhältnisse der Fig. 6 den Wert VS/VK ∼ 3,1. Dementsprechend hat das Verhältnis der hydraulischen Aufenthaltszeit tS in dem Sedimentationsbehälter 60 zur hydraulischen Aufenthaltszeit tK im Kristallisationsbehälter 50 den Wert tS/tK ∼ 3,1. Der Volumenstrom (dV/dt) durch den Kristallisationsbehälter 50 ist nahezu gleich dem Volumenstrom durch den Sedimentationsbehälter 60. Kleine, praktisch vernachlässigbare Differenzen zwischen den Volumenströmen durch den Kristallisationsbehälter 50 und den Sedimentationsbehälter 60 sind durch intermittierende Entnahme von grobkörnigem Präzipitat 201 aus dem Kristallisationsbehälter 50 bedingt. Bei gleichen Volumenströmen folgt aus der Kontinuitätsgleichung, dass das Verhältnis der minimalen Strömungsgeschwindigkeit GK im Kristallisationsbehälter 50 zu der minimalen Strömungsgeschwindigkeit GS im Sedimentationsbehälter 60 umgekehrt proportional zum Verhältnis der maximalen Querschnittsflächen QS/QK ist, d.h. GK/GS = QS/QK = 4. Die im Vergleich zu GS höhere Strömungsgeschwindigkeit GK im Kristallisationsbehälter bewirkt eine verbesserte Fluidisierung des grobkörnigen Präzipitats 201, so dass im Abwasser enthaltene Trockensubstanz aus dem Präzipitat 201 nach oben ausgeschwemmt wird. Umgekehrt begünstigt die im Vergleich zu tK erhöhte hydraulische Aufenthaltszeit tS sowie die im Vergleich zu GK verringerte minimale Strömungsgeschwindigkeit GS im Sedimentationsbehälter 60 die Trennung von feinkörnigem Präzipitat 202 und Trockensubstanz.

Optional ist, wie vorstehend erläutert, ein Lüfter für die Einbringung von feinperligen Luftblasen in das Abwasser vorgesehen. Der Lüfter umfasst ein Gebläse 57 und eine oder mehrere Auslassdüsen, die vorzugsweise in der Leitung 51 angeordnet sind. Durch die Einbringung feinperligen Luftblasen in das Abwasser wird die Flotation von Trockensubstanz in dem Abwasser im Sedimentationsbehälter 60 gefördert.

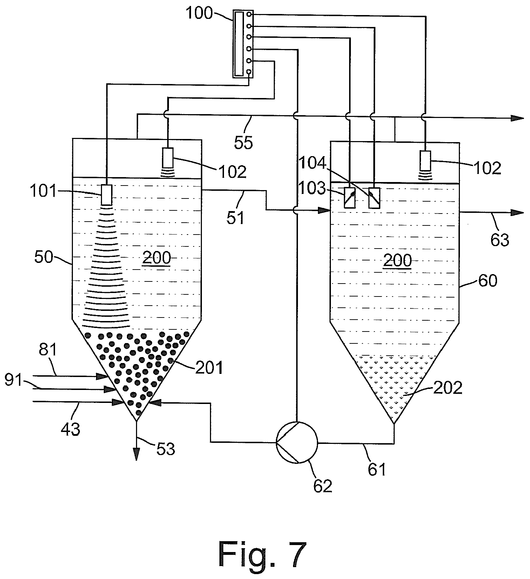

Fig. 7 zeigt eine weitere Teilansicht einer erfindungsgemäßen Vorrichtung, wobei übereinstimmende Bezugszeichen die gleiche Bedeutung und Funktion haben, wie vorstehend im Zusammenhang mit Fig. 3 und 4 beschrieben. Ein Kristallisationsbehälter 50 ist mit einem Sedimentationsbehälter 60 über Leitungen 51 und 61 fluidisch verbunden. Der Kristallisationsbehälter 50 und der Sedimentationsbehälter 60, in Verbindung mit den Leitungen 51, 61 bilden eine Rezirkulationschleife für Abwasser 200, wobei der Volumenstrom (dV/dt) der Rezirkulation mittels eines in der Leitung 61 angeordneten regelbaren Fluidantriebs 62, vorzugsweise einer Schnecken- oder Drehkolbenpumpe 62 variiert werden kann. Im Weiteren umfasst die Vorrichtung eine elektronische Steuerung 100 und mit der Steuerung verbundene Sensoren 101, 102, 103 und 104. Der Sensor 101 ist in dem Kristallisationsbehälter 50 angeordnet und dient zur Messung der Lage bzw. Höhe einer Trennschicht zwischen Abwasser 200 und einem Sediment aus grobkörnigem Präzipitat 201. Der Sensor 101 ist vorzugsweise als Ultraschallsensor ausgebildet und umfasst einen Sender und Empfänger bzw. einen Wandler (Transducer) für Ultraschallwellen. Die Lage der Trennschicht wird anhand der Laufzeit von Ultraschallpulsen, die von dem Sensor 101 abgestrahlt und an der Trennschicht reflektiert werden, gemessen. Anhand der Laufzeit und Geschwindigkeit der Ultraschallpulse in dem Abwasser 200 wird nach Kalibrierung des Sensors 101 die Lage der Trennschicht elektronisch bestimmt. Geeignete Ultraschallsensoren 101 werden kommerziell angeboten, beispielsweise Geräte des Typs *NivuScope* 2 von der Firma NIVUS GmbH oder des Typs *Pointek ULS200* von der Firma Siemens. Alternativ kann der Sensor 101 auch als Radar- bzw. Mikrowellensensor ausgebildet sein. Entsprechende Radarsensoren sind erhältlich von der Firma Siemens unter der Typbezeichnung *sitrans lg200.* Vorzugsweise ist der Sensor 101, wie in Fig. 7 gezeigt, derart positioniert, dass mindestens die Sende- und Empfangsapertur oder auch der gesamte Sensor 101 in Abwasser 200 eingetaucht ist. Jeweils ein Sensor 102 ist in dem Kristallisationsbehälter 50 und dem Sedimentationsbehälter 60 angeordnet und dient zur Messung der Pegelhöhe bzw. Füllstandes des Abwassers 200. Die beiden Sensoren 102 sind vorzugsweise als Ultraschallsensoren ausgebildet, wie vorstehend im Zusammenhang mit dem Sensor 101 beschrieben. Im Gegensatz zu Sensor 101 sind die Sensoren 102 jedoch oberhalb der Oberfläche des Abwassers 200 positioniert. Die Oberfläche bzw. der Pegelstand des Abwassers 200 in dem Kristallisationsbehälter 50 und dem Sedimentationsbehälter 60 wird mittels des jeweiligen Sensors 102 anhand der Laufzeit von an der Oberfläche des Abwassers 200 reflektierten Ultraschallpulsen in Luft bestimmt.

Die Sensoren 103 und 104 dienen zur Messung des pH-Wertes, respektive des Phosphatgehaltes des Abwassers 200 und sind vorzugsweise in dem Sedimentationsbehälter 60 angeordnet. Bei dem pH-Sensor 103 und dem Phosphatsensor 104 handelt es sich beispielsweise um Geräte des Typs *Ceramax CPS341D,* respektive des Typs *Stamolys CA71PH* der Firma Endress+Hauser.

Die Steuerung 100 ist als speicherprogrammierbare Steuerung (SPS) oder als PC-basierte Steuerung (Soft-SPS) ausgebildet und umfasst einen oder mehrere Eingänge für die Sensoren 101, 102, 103, 104 und einen oder mehrere Ausgänge für die Ansteuerung von Fluidantrieben, Pumpen, Dosiereinrichtungen, Ventilen und mechanischen Komponenten, wie beispielsweise einer Förderschnecke.

Im Rahmen der Erfindung ist vorgesehen, dass die in Fig. 3, 4 und 5 gezeigten
- Ventile 10A, 10B, 10C, 10D, 10E, 10F, 10E, 10G, 10H, 10J, 10K;
- Fluidantriebe 42, 44, 62, 64;
- Vakuumpumpen bzw. Gebläse 46, 57; und/oder
- Dosiereinrichtungen 82, 92
jeweils unabhängig voneinander mit der elektronischen Steuerung 100 verbunden sind.

Die elektronische Steuerung 100 und ein darin gespeichertes Steuerungsprogramm sind dafür eingerichtet bzw. programmiert:
- den Volumenstrom des der Vorrichtung von außen zugeführten Abwassers zu steuern;
- den Volumenstrom des aus der Vorrichtung nach außen abgeführten Abwassers zu steuern;
- den Volumenstrom des von dem Rückhaltemodul in das Fällungsmodul zurückgeführten Abwassers zu steuern;
- die Entnahme von Präzipitat aus dem Fällungsmodul anhand des Präzipitatgehalts in dem Kristallisationsbehälter 50 zu steuern;
- die Entnahme von Präzipitat aus dem Fällungsmodul anhand des Phosphatgehalts im Abwasser 200 zu steuern;
- die Entnahme von Präzipitat aus dem Fällungsmodul anhand des pH-Wertes des Abwassers 200 zu steuern;
- die Entnahme von Präzipitat aus dem Fällungsmodul anhand des Phosphatgehalts und des pH-Wertes des Abwassers 200 zu steuern;
- die Zufuhr und Dosierung eines magnesiumhaltigen Reagenz von dem Vorlagebehälter zu dem Fällungsmodul anhand des Phosphatgehaltes und/oder des pH-Wertes des Abwassers 200 zu steuern; und/oder
- die Zufuhr und Dosierung eines basischen Reagenz von dem Vorlagebehälter zu dem Fällungsmodul anhand des Phosphatgehaltes und/oder des pH-Wertes des Abwassers 200 zu steuern.

### Bezugszeichenliste

- 1: Klärbecken für aerobe Abwasserbehandlung
- 2: Faulbehälter oder Faulturm für anaerobe Abwasserbehandlung
- 3: Vorrichtung für Phosphorextraktion
- 4: Gasabscheider
- 5: Fällungsmodul
- 6: Rückhaltemodul
- 7: Austrageinrichtung für phosphorhaltiges Präzipitat
- 8: Versorgungseinheit für magnesiumhaltiges Reagenz
- 9: Versorgungseinheit für basisches Reagenz
- 10A: Ventil, vorzugsweise elektrisch oder pneumatisch stellbar
- 10B: Ventil, vorzugsweise elektrisch oder pneumatisch stellbar
- 10C: Ventil, vorzugsweise elektrisch oder pneumatisch stellbar
- 10D: Ventil, vorzugsweise elektrisch oder pneumatisch stellbar
- 10E: Ventil, vorzugsweise elektrisch oder pneumatisch stellbar
- 10F: Ventil, vorzugsweise elektrisch oder pneumatisch stellbar
- 10G: Ventil, vorzugsweise elektrisch oder pneumatisch stellbar
- 10H: Ventil, vorzugsweise elektrisch oder pneumatisch stellbar
- 10J: Ventil, vorzugsweise elektrisch oder pneumatisch stellbar
- 10K: Ventil, vorzugsweise elektrisch oder pneumatisch stellbar
- 40: Unterdruclebehälter
- 41: Einlassleitung für zu behandelndes Abwasser
- 42: Fluidantrieb, insbesondere Schneckenpumpe
- 43: Leitung für die Übertragung von Abwasser aus dem Gasabscheider in das Fällungsmodul
- 43A: Leitung für die Übertragung von Abwasser aus dem Gasabscheider in den Kristallisationsbehälter
- 43B: Leitung für die Übertragung von Abwasser aus dem Gasabscheider in den Mischbehälter
- 44: Fluidantrieb, insbesondere Schneckenpumpe
- 45: Leitung für die Abführung von Gas aus dem Gasabscheider
- 46: Vakuumpumpe, insbesondere Gebläse
- 50: Kristallisationsbehälter
- 51: Leitung für die Übertragung von Abwasser aus dem Fällungsmodul in das Rückhaltemodul
- 52: Mischbehälter
- 53: Leitung für die Übertragung von phosphorhaltigem Präzipitat aus dem Fällungsmodul in die Austrageinrichtung
- 54: Bypassleitung für die Leitung 53
- 55: Leitung für die Abführung von Gas aus dem Fällungsmodul
- 57: Lüftergebläse
- 60: Sedimentationsbehälter
- 61: Leitung für die Rückführung von Abwasser aus dem Rückhaltemodul in das Fällungsmodul
- 62: Fluidantrieb, insbesondere Drehlcolbenpumpe
- 63: Leitung für die Übertragung von Abwasser aus dem Sedimentationsbehälter in einen Hydrozyklon
- 66: Hydrozyklon
- 67: Leitung für die Rückführung einer Abwasserfraktion aus dem Hydrozyklon in den Sedimentationsbehälter
- 65: Auslassleitung für behandeltes Abwasser
- 69: Leitung für die Abführung von Gas aus dem Rückhaltemodul
- 70: Schleusenkammer
- 71: Leitung für die Zuführung von Waschwasser zu der Schleusenkammer 70
- 71A: Leitung für die Zuführung von Waschwasser in einen oberen Bereich der Schleusenkammer
- 71B: Leitung für die Zuführung von Waschwasser in einen unteren Bereich der S chleusenkammer
- 73: Auslassleitung für phosphorhaltiges Präzipitat
- 75: Auslassleitung für Waschwasser
- 80: Vorlagebehälter für magnesiumhaltiges Reagenz
- 81: Leitung für die Zuführung von magnesiumhaltigem Reagenz aus dem Vorlagebehälter 80 in das Fällungsmodul 5
- 82: Dosiereinrichtung, insbesondere Dosierpumpe
- 90: Vorlagebehälter für basisches Reagenz
- 91: Leitung für die Zuführung von basischem Reagenz aus dem Vorlagebehälter 90 in das Fällungsmodul 5
- 92: Dosiereinrichtung, insbesondere Dosierpumpe
- 100: elektronische Steuerung
- 101: Trennschichtsensor
- 102: Füllstandsensor
- 103: Phosphat-Sensor
- 104: pH-Sensor
- 200: Abwasser
- 201: grobkörnige phosphorhaltige Kristalle
- 202: feinkörnige phosphorhaltige Kristalle

## Patentansprüche

1. Vorrichtung (3, 3A, 3B) für die Extraktion von Phosphor aus Abwasser (200), umfassend ein Fällungsmodul (5) und ein Rückhaltemodul (6), wobei das Fällungsmodul (5) einen Kristallisationsbehälter (50), einen oder mehrere in einem unteren Bereich des Fällungsmoduls (5) angeordnete Einlässe und mindestens einen in einem oberen Bereich des Fällungsmoduls (5) angeordneten Auslass umfasst, das Rückhaltemodul (6) einen Sedimentationsbehälter (60), mindestens einen in einem oberen Bereich des Rückhaltemoduls (6) angeordneten Einlass und mindestens einen in einem unteren Bereich des Rückhaltemoduls (6) angeordneten Auslass umfasst, mindestens ein Auslass des Fällungsmoduls (5) mit mindestens einem Einlass des Rückhaltemoduls (6) und mindestens ein Auslass des Rückhaltemoduls (6) mit mindestens einem Einlass des Fällungsmoduls (5) verbunden ist, **dadurch gekennzeichnet, dass** das Volumen VS des Sedimentationsbehälters (60) größer/gleich dem 0,6-fachen des Volumens VK des Kristallisationsbehälters (50) ist (VS ≥ 0,6·VK).

2. Vorrichtung (3, 3A, 3B) nach Anspruch 1, **dadurch gekennzeichnet, dass** das Verhältnis des Volumens VS des Sedimentationsbehälters (60) zu dem Volumen VK des Kristallisationsbehälters (50) größer/gleich 0,8 (VS/VK ≥ 0,8), größer/gleich 1,0 (VS/VK ≥ 1,0) oder größer/gleich 1,2 (VS/VK ≥ 1,2) ist.

3. Vorrichtung (3, 3A, 3B) nach Anspruch 1 oder 2, **dadurch gekennzeichnet, dass** eine maximale Querschnittsfläche QS des Sedimentationsbehälters (60) größer/gleich einer maximalen Querschnittsfläche QK des Kristallisationsbehälters (50) ist (QS ≥ QK).

4. Vorrichtung (3, 3A, 3B) nach einem oder mehreren der Ansprüche 1 bis 3, **dadurch gekennzeichnet, dass** das Verhältnis der maximalen Querschnittsfläche QS des Sedimentationsbehälters (60) zu der maximalen Querschnittsfläche QK des Kristallisationsbehälters (50) größer/gleich 2 (QS/QK ≥ 2), größer/gleich 3 (QS/QK ≥ 3) oder größer/gleich 4 (QS/QK ≥ 4) ist.

5. Vorrichtung (3, 3A, 3B) nach einem oder mehreren der Ansprüche 1 bis 4, **dadurch gekennzeichnet, dass** die Vorrichtung (3, 3A, 3B) eine unterhalb des Fällungsmoduls (5) angeordnete Austrageinrichtung (7) für die Entnahme von phosphorhaltigem Präzipitat (201) aus dem Fällungsmodul (5) umfasst.

6. Vorrichtung (3, 3A, 3B) nach einem oder mehreren der Ansprüche 1 bis 5, **dadurch gekennzeichnet, dass** mindestens ein Auslass des Rückhaltemoduls (6) über eine Rückführleitung (61) mit mindestens einem Einlass des Fällungsmoduls (5) verbunden und die Rückführleitung (61) mit einem Fluidantrieb (62) ausgerüstet ist.

7. Vorrichtung (3, 3A, 3B) nach einem oder mehreren der Ansprüche 1 bis 6, **dadurch gekennzeichnet, dass** das Fällungsmodul (5) einen unterhalb des Kristallisationsbehälters (50) angeordneten und mit diesem verbundenen Mischbehälter (52) umfasst.

8. Vorrichtung (3, 3A, 3B) nach einem oder mehreren der Ansprüche 1 bis 7, **dadurch gekennzeichnet, dass** die Vorrichtung (3, 3A, 3B) einen Gasabscheider (4) umfasst, der über eine Zulaufleitung (43) mit mindestens einem Einlass des Fällungsmoduls (5) verbunden ist.

9. Vorrichtung (3, 3A, 3B) nach einem oder mehreren der Ansprüche 1 bis 8, **dadurch gekennzeichnet, dass** das Rückhaltemodul (6) einen Hydrozyklon (66) umfasst, wobei ein Einlass des Hydrozyklons (66) mit einem, in einem oberen Bereich des Sedimentationsbehälters (60) angeordneten Auslass und ein Auslass des Hydrozyklons (66) mit einem, in einem unteren Bereich des Sedimentationsbehälters (60) angeordneten Einlass, mit der Rückführleitung (61) oder mit einem Einlass des Fällungsmoduls (5) verbunden ist.

10. Vorrichtung (3, 3A, 3B) nach einem oder mehreren der Ansprüche 1 bis 9, **dadurch gekennzeichnet, dass** der Kristallisationsbehälter (50) mit mindestens einem Sensor (101) für die Messung des Präzipitatgehalts (201) in dem Abwasser (200) ausgerüstet ist.

11. Vorrichtung (3, 3A, 3B) nach einem oder mehreren der Ansprüche 1 bis 10, **dadurch gekennzeichnet, dass** die Vorrichtung (3, 3A, 3B) eine elektronische Steuerung (100) umfasst.

12. Verfahren für die Extraktion von Phosphor aus Abwasser (200), umfassend die Schritte Fällung von phosphorhaltigem Präzipitat (201) in einem Kristallisationsbehälter (50) in einer aufwärts gerichteten Abwasserströmung (203), Sedimentation von Präzipitat (202) in einem Sedimentationsbehälter (60) in einer abwärts gerichteten Abwasserströmung (205) und Rückführung von Abwasser (200) und Präzipitat (202) von dem Sedimentationsbehälter (60) in den Kristallisationsbehälter (50), **dadurch gekennzeichnet, dass** die hydraulische Aufenthaltszeit tS des Abwassers (200) in dem Sedimentationsbehälter (60) größer/gleich dem 0,6-fachen der hydraulischen Aufenthaltszeit tK des Abwassers (200) in dem Kristallisationsbehälter (50) (tS ≥ 0,6·tK) ist.

13. Verfahren nach Anspruch 12, **dadurch gekennzeichnet, dass** das Verhältnis der hydraulischen Aufenthaltszeit tS in dem Sedimentationsbehälter (60) zur hydraulischen Aufenthaltszeit tK in dem Kristallisationsbehälter (50) größer/gleich 0,8 (tS/tK ≥ 0,8), größer/gleich 1,0 (tS/tK ≥ 1,0) oder größer/gleich 1,2 (tS/tK ≥ 1,2) ist.

14. Verfahren nach Anspruch 12 oder 13, **dadurch gekennzeichnet, dass** das pro Zeiteinheit aus dem Sedimentationsbehälter (60) in den Kristallisationsbehälter (50) rückgeführte Abwasservolumen mittels eines regelbaren Fluidantriebs (62) variiert wird.

15. Verfahren nach einem oder mehreren der Ansprüche 12 bis 14, **dadurch gekennzeichnet, dass** der Präzipitatgehalt (201) des Abwassers (200) in dem Kristallisationsbehälter (50) gemessen und in Abhängigkeit von dem gemessenen Präzipitatgehalt (201), Präzipitat (201) aus dem Kristallisationsbehälter (50) entnommen wird.
